# EUROPEAN PATENT APPLICATION

(11) **EP 4 848 806 A1**
(43) Date of publication of application: **02.12.2026**
(21) Application number: 25751234.3
(22) Date of filing: 22.01.2025
(51) Int. Cl.: H04W 28/24

(54) **QUALITY OF SERVICE MANAGEMENT METHOD AND RELATED DEVICE**

(30) Priority: 08.02.2024 CN 202410178283
(71) Applicant: Huawei Technologies Co., Ltd., Shenzhen, Guangdong 518129 (CN)
(72) Inventor: ZHANG, Kuan, Shenzhen, Guangdong 518129 (CN); PENG, Chenghui, Shenzhen, Guangdong 518129 (CN); WANG, Jun, Shenzhen, Guangdong 518129 (CN)
(74) Representative: Huawei European IPR
(86) International application number: PCT/CN2025/073895
(87) International publication number: WO 2025/167632

(57) **Abstract**

A quality of service management method and a related apparatus are disclosed, enabling quality of service (quality of service, QoS) indicated by a first communication apparatus to be used as a control policy for a plurality of service types, while also allowing a receiver of the service QoS to implement service requirement assurance and service output requirement assurance based on the service QoS. In the method, the first communication apparatus determines first information, where the first information indicates first service QoS of a service, the service is everything as a service (everything as a service, XaaS), an output of the service includes at least one type of output, and the first service QoS of the service includes QoS of the service and QoS of all or part of the at least one type of output; and the first communication apparatus sends the first information.

## Description

This application claims priority to Chinese Patent Application No. 202410178283.2, filed with the China National Intellectual Property Administration on February 8, 2024 and entitled "QUALITY OF SERVICE MANAGEMENT METHOD AND RELATED APPARATUS", which is incorporated herein by reference in its entirety.

### TECHNICAL FIELD

This application relates to the field of communication technologies, and in particular, to a quality of service management method and a related apparatus.

### BACKGROUND

In a wireless communication network, communication signals transmitted between different communication devices may be used to carry data. In this manner, the communication devices can obtain corresponding network services based on the data. To improve data transmission quality, a control policy for transmitting communication signals between communication devices may be determined and delivered through a policy control function (policy control function, PCF).

Currently, in new radio (new radio, NR) scenarios, data transmission is intended to provide connectivity services for terminal devices. For example, a communication network may provide connectivity services for terminal devices through a protocol data unit (protocol data unit, PDU) session (Session). Correspondingly, the control policy determined by the PCF is mainly used to configure quality of service (quality of service, QoS) requirements of communication links between different communication devices in the PDU session, including a communication link between a terminal device and an access network device, a communication link between the access network device and a user plane function network element in a core network, and the like.

However, with the development of communication networks, services provided by the communication networks may no longer be limited to connectivity services. Correspondingly, such services are no longer provided in the form of a PDU session. As a result, the control policy determined by the PCF becomes inapplicable.

### SUMMARY

This application provides a quality of service management method, enabling service QoS indicated by a first communication apparatus to be used as a control policy for a plurality of service types, while also allowing a receiver of the service QoS to implement service requirement assurance and service output requirement assurance based on the service QoS.

A first aspect of this application provides a quality of service management method. The method is performed by a first communication apparatus. The first communication apparatus may be a communication device, or the first communication apparatus may be a part of components (for example, a processor, a chip, or a chip system) in a communication device, or the first communication apparatus may be a logical module or software that can implement all or a part of functions of the communication device. In the method, the first communication apparatus determines first information, where the first information indicates first service QoS of a service; an output of the service includes at least one type of output, and the first service QoS of the service includes QoS of the service and QoS of all or part of the at least one type of output; and the first communication apparatus sends the first information.

Based on the foregoing technical solution, the first information determined and sent by the first communication apparatus indicates the first service QoS. The first service QoS includes the QoS of the service and the QoS of all or part of the at least one type of output included in the output of the service. A service type of a service provided by a communication network may not be limited to a connectivity service. Because the QoS that is of the service and that is included in the first service QoS may indicate requirements (or overall requirements) of services of different service types, the QoS that is of the at least one type of output and that is included in the first service QoS may indicate a requirement of an output of a specific type of service. In this way, the service QoS indicated by the first communication apparatus can be used as a control policy for a plurality of service types, and a receiver of the service QoS can implement service requirement assurance and service output requirement assurance based on the service QoS.

In this application, the service may be everything as a service (everything as a service, XaaS). For example, the service may include at least one of network as a service (network as a service, NaaS), computing as a service (computing as a service, CaaS), sensing as a service (sensing as a service, SaaS), artificial intelligence (artificial intelligence, AI) as a service (AI as a service, AIaaS), and data as a service (data as a service, DaaS).

Optionally, the service may further include another service, for example, another type of service that may appear or be defined in a future network.

It should be understood that the first communication apparatus is a communication apparatus that determines the service QoS. For example, the first communication apparatus may be a PCF network element, or the first communication apparatus may be a network element/device (for example, an access network element/access network device) having a PCF function.

In a possible implementation of the first aspect, that the first communication apparatus sends the first information includes: The first communication apparatus sends all or part of the first information to a second communication apparatus.

Based on the foregoing technical solution, the first communication apparatus may send all or part of the first information to the second communication apparatus, where the second communication apparatus may be configured to determine task QoS based on the service QoS. Therefore, the second communication apparatus may determine, based on the first service QoS, task QoS of one or more tasks corresponding to the service, so as to provide a control policy for each task based on the task QoS.

In a possible implementation of the first aspect, the method further includes: The first communication apparatus receives orchestration information of the service from a fifth communication apparatus, where the orchestration information is used to determine the second communication apparatus.

Based on the foregoing technical solution, the first communication apparatus may further receive the orchestration information from the fifth communication apparatus. The orchestration information may indicate coordinated scheduling between tasks corresponding to the service. Correspondingly, the first communication apparatus may determine, based on the orchestration information, the second communication apparatus corresponding to each task, so that the first communication apparatus sends all or part of the first information to the second communication apparatus that is indicated by the orchestration information and that participates in task processing.

Optionally, the first communication apparatus may further send the first information to one or more second communication apparatuses managed by, controlled by, or connected to the first communication apparatus. Subsequently, one or more second communication apparatuses that execute one or more tasks corresponding to the service may be determined in a manner of mutual interaction between different second communication apparatuses. In this manner, the first communication apparatus may not need to determine the second communication apparatus based on the orchestration information, so that implementation complexity of the first communication apparatus can be reduced.

In a possible implementation of the first aspect, that the first communication apparatus sends the first information includes: The first communication apparatus sends the first information to a fifth communication apparatus.

Based on the foregoing technical solution, the first communication apparatus may send all or part of the first information to the fifth communication apparatus, where the fifth communication apparatus may determine orchestration information of the service based on the service QoS. Therefore, the fifth communication apparatus may determine, based on the first service QoS, the orchestration information corresponding to the service, to indicate coordinated scheduling between tasks based on the orchestration information.

In a possible implementation of the first aspect, before the first communication apparatus sends the first information to the fifth communication apparatus, the method further includes: The first communication apparatus receives first request information from the fifth communication apparatus, where the first request information is used to request the first information, and the first request information includes a service identifier of the service.

Based on the foregoing technical solution, the first communication apparatus may send the first information to the fifth communication apparatus based on the first request information of the fifth communication apparatus. The first request information may include the service identifier of the service. In this way, the solution can be applied to a scenario in which the fifth communication apparatus initiates a request to obtain the service QoS.

In a possible implementation of the first aspect, that the first communication apparatus sends the first information includes: The first communication apparatus sends the first information to a unified data repository (unified data repository, UDR).

Based on the foregoing technical solution, the first communication apparatus may send, to the UDR, the first information indicating the first service QoS, and the UDR may be configured to store data, so that another apparatus can subsequently obtain the service QoS through the UDR.

Optionally, a network element used for data storage may be the UDR, or may be replaced with another network element/device, for example, another network element/device defined in a future standard. This is not limited herein.

In a possible implementation of the first aspect, before the first communication apparatus determines the first information, the method further includes: The first communication apparatus sends indication information that indicates second service QoS of the service; and the first communication apparatus receives second request information, where the second request information is used to request to update the second service QoS, and the first service QoS of the service is determined based on a service requirement of the service and the second service QoS.

Based on the foregoing technical solution, the first communication apparatus may further send the second service QoS of the service. In addition, when a current resource does not satisfy the second service QoS (for example, the second communication apparatus determines that the current resource does not satisfy the second service QoS, and consequently the task QoS cannot be generated, or the fifth communication apparatus determines that the current resource does not satisfy the second service QoS, and consequently the orchestration information cannot be generated), the first communication apparatus may receive the second request information used to request to update the second service QoS, and perform update based on the service requirement and the second service QoS, to obtain the first service QoS.

In a possible implementation of the first aspect, the method further includes: The first communication apparatus receives subscription information of the service from an endpoint management function (endpoint management function, EMF), where the first service QoS of the service is determined based on the service requirement of the service and the subscription information of the service.

Based on the foregoing technical solution, the first communication apparatus may determine the first service QoS of the service based on the service requirement of the service and the subscription information indicated by the EMF, so that a data transmission process implemented subsequently by another node based on the first service QoS can satisfy the service requirement of the service and subscription content indicated by the subscription information.

Optionally, the subscription information of the service includes at least one of the following: a node type, a subscription service type, and service priority information.

A second aspect of this application provides a quality of service management method. The method is performed by a second communication apparatus. The second communication apparatus may be a communication device, or the second communication apparatus may be a part of components (for example, a processor, a chip, or a chip system) in a communication device, or the second communication apparatus may be a logical module or software that can implement all or a part of functions of the communication device. In the method, the second communication apparatus receives first information from a first communication apparatus, where the first information indicates first service QoS of a service, an output of the service includes at least one first-type output, and the first service QoS of the service includes QoS of the service and QoS of all or part of the at least one first-type output; and where service data of the service is provided at least through K tasks, where K is a positive integer. The second communication apparatus sends second information, where the second information indicates task QoS of the K tasks or resource QoS of the K tasks, and the task QoS of the K tasks and the resource QoS of the K tasks are determined based on the first service QoS of the service.

Based on the foregoing technical solution, the first information received by the second communication apparatus indicates the first service QoS. The first service QoS includes the QoS of the service and the QoS of all or part of the at least one first-type output included in the output of the service. Then, the second communication apparatus may send the second information indicating the task QoS of the K tasks or the resource QoS of the K tasks. A service type of a service provided by a communication network may not be limited to a connectivity service. Because the QoS that is of the service and that is included in the first service QoS may indicate requirements (or overall requirements) of services of different service types, the QoS that is of the at least one first-type output and that is included in the first service QoS may indicate a requirement of an output of a specific type of service. In this way, the service QoS indicated by the first communication apparatus can be used as a control policy for a plurality of service types, and the second communication apparatus can implement service requirement assurance and service output requirement assurance based on the task QoS and the resource QoS that are indicated by the second information.

Optionally, the service includes at least one of network as a service, computing as a service, sensing as a service, AI as a service, and data as a service.

It should be understood that, when the second information sent by the second communication apparatus may include the task QoS, the second communication apparatus is a communication apparatus that determines the task QoS based on the service QoS. For example, the second communication apparatus may be a task anchor (task anchor, TA), or the second communication apparatus may be a network element/device (for example, an access network element/access network device) having a TA function.

It should be understood that, when the second information sent by the second communication apparatus may include the resource QoS, the second communication apparatus is a communication apparatus that determines the resource QoS based on the service QoS. For example, the second communication apparatus may be a TA having a TS function, or the second communication apparatus may be a network element/device (for example, an access network element/access network device) having a TA function and the TS function.

In a possible implementation of the second aspect, an output of each of the K tasks includes at least one second-type output, and task QoS of each task includes QoS of each task and QoS of all or part of the at least one second-type output.

Based on the foregoing technical solution, the second information sent by the second communication apparatus may include the task QoS of the K tasks, and the task QoS of each task may include the QoS of each task and the QoS of all or part of the second-type output. In this way, the second communication apparatus can implement task requirement assurance and task output requirement assurance based on the task QoS indicated by the second information.

In a possible implementation of the second aspect, each of the K tasks includes one or more subtasks, and the resource QoS of the K tasks includes resource QoS of the one or more subtasks; and the resource QoS of the K tasks is determined based on the task QoS of the K tasks.

Optionally, the resource QoS may include QoS of one or more types of resources. The one or more types of resources may include a connection resource, a compute resource, a data resource, an algorithm resource (or a model resource), or the like.

Optionally, resource QoS of each subtask includes one or more QoS characteristics and a QoS parameter corresponding to each QoS characteristic.

Based on the foregoing technical solution, the second information sent by the second communication apparatus may include the resource QoS of the K tasks, where each of the K tasks may include the one or more subtasks, and the resource QoS of the K tasks may include the resource QoS of the one or more subtasks. In this way, the resource QoS of the subtasks of each task can be determined, so that subsequent service data can be used to implement resource requirement assurance of each subtask.

In a possible implementation of the second aspect, that the task QoS of the K tasks is determined based on the service QoS of the service includes: The task QoS of the K tasks is determined based on the service QoS of the service and at least one of the following: orchestration information of the service, or a task QoS template.

Based on the foregoing technical solution, in addition to the service QoS of the service, a determining basis for determining the task QoS by the second communication apparatus may include the orchestration information of the service. In this manner, the second communication apparatus can implement coordinated scheduling between tasks determined based on the orchestration information, to determine the task QoS of each task.

In addition/alternatively, in addition to the service QoS of the service, the determining basis for determining the task QoS by the second communication apparatus may include the task QoS template. In this manner, the task QoS can be quickly determined, thereby reducing a processing latency.

In a possible implementation of the second aspect, the method further includes: The second communication apparatus receives the orchestration information of the service from a fifth communication apparatus.

Based on the foregoing technical solution, the second communication apparatus may receive the orchestration information from the fifth communication apparatus, where the orchestration information may indicate coordinated scheduling between the tasks corresponding to the service, to determine, based on the orchestration information, the task QoS corresponding to each task.

In a possible implementation of the second aspect, before the second communication apparatus receives the orchestration information (for example, first orchestration information) of the service from the fifth communication apparatus, the method further includes: The second communication apparatus receives second orchestration information of the service from the fifth communication apparatus; and the second communication apparatus sends third request information to the fifth communication apparatus, where the third request information is used to request to update the second orchestration information.

Based on the foregoing technical solution, the second communication apparatus may further receive the second orchestration information of the service, and when a current resource does not satisfy the second orchestration information (for example, the second communication apparatus determines that the current resource does not satisfy task coordinated scheduling indicated by the second orchestration information), the second communication apparatus may send the third request information used to request to update the second orchestration information, and obtain updated first orchestration information.

In a possible implementation of the second aspect, the method further includes: The second communication apparatus determines the orchestration information of the service based on the service QoS of the service.

Based on the foregoing technical solution, the second communication apparatus may determine the orchestration information of the service based on the service QoS. Correspondingly, the second communication apparatus may determine the orchestration information of the service based on the service QoS of the service. In this manner, the second communication apparatus may locally determine the orchestration information of the service, to reduce overhead.

In a possible implementation of the second aspect, the task QoS template satisfies at least one of the following:
the task QoS template is determined based on device information of one or more third communication apparatuses connected to the second communication apparatus;
the task QoS template is determined based on service QoS of a service historically processed by the second communication apparatus, orchestration information of the historically processed service, and historically processed task QoS; or
the task QoS template is determined based on feedback information on the historically processed task QoS from the one or more third communication apparatuses connected to the second communication apparatus.

Based on the foregoing technical solution, the task QoS template used to determine the task QoS may be implemented in any one of the foregoing, to improve flexibility of implementing the solution.

In a possible implementation of the second aspect, before the second communication apparatus receives all or part of the first information from the first communication apparatus, the method further includes: The second communication apparatus receives fourth request information, where the fourth request information is used to request the service, and the fourth request information includes a service identifier of the service; the second communication apparatus sends fifth request information to an EMF based on the fourth request information, where the fifth request information is used to request the service; and the second communication apparatus receives an identifier or an address of the first communication apparatus from the EMF.

Based on the foregoing technical solution, after the second communication apparatus receives the fourth request information used to request the service, the second communication apparatus may send, based on the fourth request information, the fifth request information used to request the service, and obtain the identifier or the address of the first communication apparatus indicated by the receiver of the fifth request information, so that the second communication apparatus can determine the first communication apparatus that provides the service QoS. Subsequently, the second communication apparatus may request the service QoS of the service from the first communication apparatus based on the identifier or the address of the first communication apparatus.

A third aspect of this application provides a quality of service management method. The method is performed by a third communication apparatus. The third communication apparatus may be a communication device, or the third communication apparatus may be a part of components (for example, a processor, a chip, or a chip system) in a communication device, or the third communication apparatus may be a logical module or software that can implement all or a part of functions of the communication device. In the method, the third communication apparatus receives second information, where the second information indicates task QoS of K tasks, the K tasks are used to provide service data of a service, and K is a positive integer; and the third communication apparatus sends third information, where the third information indicates resource QoS of the K tasks, and the resource QoS of the K tasks is determined based on the task QoS of the K tasks.

Based on the foregoing technical solution, the second information received by the third communication apparatus may indicate the task QoS of the K tasks. Then, the third communication apparatus may determine, based on the task QoS of the K tasks, the third information indicating the resource QoS of the K tasks, and send the third information. A subsequent receiver of the third information can perform processing based on the resource QoS of the K tasks. In this way, resource QoS of a subtask of each task can be determined, so that the receiver of the third information can perform processing based on the resource QoS of the K tasks, and subsequent service data can be used to implement resource requirement assurance of each subtask.

Optionally, the service includes at least one of network as a service, computing as a service, sensing as a service, AI as a service, and data as a service.

Optionally, the resource QoS may include QoS of one or more types of resources. The one or more types of resources may include a connection resource, a compute resource, a data resource, an algorithm resource (or a model resource), or the like.

It should be understood that the third communication apparatus is a communication apparatus that determines the resource QoS based on the task QoS. For example, the third communication apparatus may be a TS, or the third communication apparatus may be a network element/device (for example, an access network element/access network device) having a TS function.

In a possible implementation of the third aspect, an output of each of the K tasks includes at least one type of output, and task QoS of each task includes QoS of each task and QoS of all or part of the at least one type of output.

Based on the foregoing technical solution, the task QoS of each task may include the QoS of each task and the QoS of all or part of the type of output. In this way, the second communication apparatus can implement task requirement assurance and task output requirement assurance based on the task QoS indicated by the second information.

A fourth aspect of this application provides a quality of service management method. The method is performed by a fourth communication apparatus. The fourth communication apparatus may be a communication device, or the fourth communication apparatus may be a part of components (for example, a processor, a chip, or a chip system) in a communication device, or the fourth communication apparatus may be a logical module or software that can implement all or a part of functions of the communication device. In the method, the fourth communication apparatus receives third information, where the third information indicates resource QoS of a task; and the fourth communication apparatus performs processing based on the resource QoS.

Based on the foregoing technical solution, the third information received by the fourth communication apparatus may indicate the resource QoS of the task, and then the fourth communication apparatus may perform processing based on the resource QoS. In this way, resource QoS of a subtask of each task can be determined, so that the fourth communication apparatus can perform processing based on resource QoS of K tasks, and subsequent service data can be used to implement resource requirement assurance of each subtask.

Optionally, the resource QoS may include QoS of one or more types of resources. The one or more types of resources may include a connection resource, a compute resource, a data resource, an algorithm resource (or a model resource), or the like.

Optionally, resource QoS of each subtask includes one or more QoS characteristics and a QoS parameter corresponding to each QoS characteristic.

It should be understood that the fourth communication apparatus is a communication apparatus that performs processing based on the resource QoS. The fourth communication apparatus may be a task executor (task executor, TE), or the fourth communication apparatus may be a network element/terminal device/network device or the like having a TE function.

A fifth aspect of this application provides a quality of service management method. The method is performed by a fifth communication apparatus. The fifth communication apparatus may be a communication device, or the fifth communication apparatus may be a part of components (for example, a processor, a chip, or a chip system) in a communication device, or the fifth communication apparatus may be a logical module or software that can implement all or a part of functions of the communication device. In the method, the fifth communication apparatus receives first information, where the first information indicates first service QoS of a service; an output of the service includes at least one type of output, the first service QoS of the service includes QoS of the service and QoS of all or part of the at least one type of output, and the service QoS of the service is used to determine first orchestration information of the service; and the fifth communication apparatus sends the first orchestration information of the service to a second communication apparatus.

Based on the foregoing technical solution, the first information received by the fifth communication apparatus may indicate the first service QoS of the service, where the first service QoS includes the QoS of the service and the QoS of all or part of the at least one type of output included in the output of the service. A service type of a service provided by a communication network may not be limited to a connectivity service. Because the QoS that is of the service and that is included in the first service QoS may indicate requirements (or overall requirements) of services of different service types, the QoS that is of the at least one type of output and that is included in the first service QoS may indicate a requirement of an output of a specific type of service, so that the fifth communication apparatus can implement service requirement assurance and service output requirement assurance based on the orchestration information determined based on the service QoS.

Optionally, the service includes at least one of network as a service, computing as a service, sensing as a service, AI as a service, and data as a service.

It should be understood that the fifth communication apparatus is a communication apparatus that determines the orchestration information of the service based on the service QoS. The fifth communication apparatus may be a network AI management and orchestration (network AI management and orchestration, NAMO) entity, or the second communication apparatus may be a network element/device having a NAMO function or the like.

In a possible implementation of the fifth aspect, service data of the service is provided at least through K tasks, K is a positive integer, and the first orchestration information includes at least one of the following: identifiers of the K tasks, routing information of the data provided by the K tasks, and an identifier/address of the second communication apparatus.

Based on the foregoing technical solution, when the service data of the service is provided at least through the K tasks, the orchestration information of the service may include at least one of the foregoing items, to indicate coordinated scheduling between the tasks based on the at least one item.

Optionally, third information further includes at least one piece of orchestration information, and the at least one piece of orchestration information is standby orchestration information of the first orchestration information. In this manner, the standby orchestration information can be provided, so that when resources are insufficient to perform scheduling based on the first orchestration information, the tasks can be coordinately scheduled based on the standby orchestration information, thereby improving processing efficiency.

In a possible implementation of the fifth aspect, before the fifth communication apparatus receives the first information, the method includes: The fifth communication apparatus receives request information used to request the service, where the request information includes a service identifier of the service; and the fifth communication apparatus sends first request information based on the request information, where the first request information is used to request the first information, and the first request information includes the service identifier of the service.

Optionally, the request information used to request the service may be from a service requester, a service user, an over-the-top (over-the-top, OTT) vendor device, or the like.

Based on the foregoing technical solution, the first communication apparatus may send the first request information based on the request information used to request the service, so that a receiver of the first request information can send the first information to the fifth communication apparatus based on the first request information. In this manner, the solution can be applied to a scenario in which the fifth communication apparatus obtains the service QoS based on the request.

Optionally, the request information used to request the service includes use case (use case) information of the service and at least one of the following: an application identifier, an identifier of the service requester, internet protocol (internet protocol, IP) information of the service requester and a service provider, and a fully qualified domain name (fully qualified domain name, FQDN).

In a possible implementation of the fifth aspect, before the fifth communication apparatus receives the first information, the method includes: The fifth communication apparatus receives indication information that indicates second service QoS of the service; and the fifth communication apparatus sends second request information to a first communication apparatus, where the second request information is used to request to update the second service QoS.

Based on the foregoing technical solution, the fifth communication apparatus may further receive the second service QoS of the service. In addition, when a current resource does not satisfy the second service QoS (for example, the fifth communication apparatus determines that the current resource does not satisfy the second service QoS, and consequently orchestration information cannot be generated), the fifth communication apparatus may send the second request information used to request to update the second service QoS, so that the first communication apparatus can perform update based on a service requirement and the second service QoS, to obtain the first service QoS.

In a possible implementation of the fifth aspect, before the fifth communication apparatus sends all or part of the third information, the method further includes: The fifth communication apparatus sends second orchestration information of the service to the second communication apparatus; and the fifth communication apparatus receives fifth request information from the second communication apparatus, where the fifth request information is used to request to update the second orchestration information.

Based on the foregoing technical solution, the fifth communication apparatus may further send the second orchestration information of the service, and when a current resource does not satisfy the second orchestration information (for example, the second communication apparatus determines that the current resource does not satisfy task coordinated scheduling indicated by the second orchestration information), the second communication apparatus may send the fifth request information used to request to update the second orchestration information, so that the fifth communication apparatus sends the updated first orchestration information based on the fifth request information.

A sixth aspect of this application provides a first communication apparatus. The apparatus is a communication device or a part of components (for example, a processor, a chip, a chip system, a logic module, or software) in a communication device. The apparatus includes a transceiver unit and a processing unit. The processing unit is configured to determine first information, where the first information indicates first service QoS of a service, the service is XaaS, an output of the service includes at least one type of output, and the first service QoS of the service includes QoS of the service and QoS of all or part of the at least one type of output. The transceiver unit is configured to send the first information.

A seventh aspect of this application provides a second communication apparatus. The apparatus is a communication device or a part of components (for example, a processor, a chip, a chip system, a logic module, or software) in a communication device. The apparatus includes a transceiver unit and a processing unit. The transceiver unit is configured to receive first information from a first communication apparatus, where the first information indicates first service QoS of a service, the service includes at least one of network as a service, computing as a service, sensing as a service, AI as a service, and data as a service, an output of the service includes at least one first-type output, and the first service QoS of the service includes QoS of the service and QoS of all or part of the at least one first-type output; where and service data of the service is provided at least through K tasks, and K is a positive integer. The processing unit is configured to determine second information. The transceiver unit is further configured to send the second information. The second information indicates task QoS of the K tasks or resource QoS of the K tasks, and the task QoS of the K tasks and the resource QoS of the K tasks are determined based on the first service QoS of the service.

An eighth aspect of this application provides a third communication apparatus. The apparatus is a communication device or a part of components (for example, a processor, a chip, a chip system, a logic module, or software) in a communication device. The apparatus includes a transceiver unit and a processing unit. The transceiver unit is configured to receive second information, where the second information indicates task QoS of K tasks, the K tasks are used to provide service data of a service, K is a positive integer, and the service includes at least one of network as a service, computing as a service, sensing as a service, AI as a service, and data as a service. The processing unit is configured to determine third information. The transceiver unit is further configured to send the third information. The third information indicates resource QoS of the K tasks, and the resource QoS of the K tasks is determined based on the task QoS of the K tasks.

A ninth aspect of this application provides a fourth communication apparatus. The apparatus is a communication device or a part of components (for example, a processor, a chip, a chip system, a logic module, or software) in a communication device. The apparatus includes a transceiver unit and a processing unit. The transceiver unit is configured to receive third information, where the third information indicates resource QoS of a task. The processing unit is configured to perform processing based on the resource QoS.

A tenth aspect of this application provides a fifth communication apparatus. The apparatus is a communication device or a part of components (for example, a processor, a chip, a chip system, a logic module, or software) in a communication device. The apparatus includes a transceiver unit and a processing unit. The transceiver unit is configured to receive first information, where the first information indicates first service quality of service QoS of a service, the service includes at least one of network as a service, computing as a service, sensing as a service, artificial intelligence AI as a service, and data as a service, an output of the service includes at least one type of output, and the first service QoS of the service includes QoS of the service and QoS of all or part of the at least one type of output. The processing unit is configured to determine first orchestration information based on the service QoS of the service. The transceiver unit is further configured to send the first orchestration information of the service to a second communication apparatus.

An eleventh aspect of this application provides a communication apparatus, including at least one processor. The memory is configured to store a program or instructions, and the at least one processor is configured to execute the program or the instructions, to enable the apparatus to implement the method according to any possible implementation in any one of the first aspect to the fifth aspect.

A twelfth aspect of this application provides a communication apparatus, including at least one logic circuit and an input/output interface. The logic circuit is configured to perform the method according to any possible implementation in any one of the first aspect to the fifth aspect.

A thirteenth aspect of this application provides a communication system. The communication system includes the foregoing first communication apparatus and one or more second communication apparatuses.

Optionally, the communication system further includes one or more third communication apparatuses.

Optionally, the communication system further includes one or more fourth communication apparatuses.

Optionally, the communication system further includes one or more fifth communication apparatuses.

A fourteenth aspect of this application provides a computer-readable storage medium. The storage medium is configured to store one or more computer-executable instructions. When the computer-executable instructions are executed by a processor, the processor performs the method according to any possible implementation in any one of the first aspect to the fifth aspect.

A fifteenth aspect of this application provides a computer program product (or referred to as a computer program). When the computer program in the computer program product is executed by a processor, the processor performs the method according to any possible implementation in any one of the first aspect to the fifth aspect.

A sixteenth aspect of this application provides a chip system. The chip system includes at least one processor, configured to support a communication apparatus in implementing the method according to any possible implementation in any one of the first aspect to the fifth aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

For technical effect brought by any design manner of the sixth aspect to the sixteenth aspect, refer to the technical effect brought by different design manners of the first aspect to the fifth aspect. Details are not described herein again.

### BRIEF DESCRIPTION OF DRAWINGS

FIG. 1 is a diagram of a communication system according to this application;
FIG. 2a to FIG. 2e are some diagrams of a communication system according to this application;
FIG. 3 is a diagram of a PDU session according to this application;
FIG. 4 is a diagram of a quality of service management method according to this application;
FIG. 5a and FIG. 5b are some diagrams of application scenarios of a quality of service management method according to this application;
FIG. 6a to FIG. 6c are some diagrams of application examples of a quality of service management method according to this application; and
FIG. 7 to FIG. 10 are some diagrams of communication apparatuses according to this application.

### DESCRIPTION OF EMBODIMENTS

First, some terms in embodiments of this application are described for ease of understanding by a person skilled in the art.
(1) Configuration and preconfiguration: In this application, both the configuration and the preconfiguration are used. The configuration means that a network device like a base station or a server sends configuration information of some parameters or parameter values to a terminal via a message or signaling, so that the terminal determines a communication parameter or a transmission resource based on the values or the information. Similar to the configuration, the preconfiguration may be a manner in which a network device like a base station or a server sends parameter information or a value to a terminal through a communication link or a carrier, or may be a manner in which a corresponding parameter or parameter value is defined in a standard or a related parameter or value is set in a terminal device in advance. This is not limited in this application. Further, these values and parameters may be changed or updated.
(2) In this application, "indicating" may include "directly indicating" and "indirectly indicating". When a piece of indication information is described as indicating A, it may be understood that the indication information carries A, directly indicates A, or indirectly indicates A.

In this application, information indicated by the indication information is referred to as to-be-indicated information. In a specific implementation, the to-be-indicated information may be indicated in a plurality of manners. For example, the to-be-indicated information may be directly indicated, for example, indicated by the to-be-indicated information or an index of the to-be-indicated information. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overhead to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device. The configuration information may include, for example but not limited to, one or a combination of at least two of radio resource control (radio resource control, RRC) signaling, media access control (media access control, MAC) layer signaling, and physical layer signaling. The MAC layer signaling includes, for example, a MAC control element (control element, CE), and the physical layer signaling includes, for example, downlink control information (downlink control information, DCI).

(3) Reference signal (reference signal, RS) In a communication system, to send and receive data, obtain system synchronization and feedback channel information, an uplink channel or a downlink channel needs to be estimated. Channel estimation refers to a process of reconstructing or restoring a received signal to compensate for signal distortion caused by fading caused by channel fading and noise, where changes in time domain and frequency domain of a channel are tracked by using a standard signal predicted by a transmitter and a receiver. The standard signal is also referred to as a reference signal, is distributed on different resource elements (resource element, RE) in time-frequency two-dimensional space in an orthogonal frequency division multiplexing (orthogonal frequency division multiplexing, OFDM) symbol, and has a known amplitude and phase.

(4) Terms "system" and "network" in embodiments of this application may be used interchangeably. "At least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

(5) "Sending" and "receiving" in embodiments of this application represent signal transmission directions. For example, "sending information to a device X" may be understood as that a target end of the information is the device X, and may include direct sending through an air interface, or indirect sending through an air interface by another unit or module. "Receiving information from a device Y" may be understood as that a source end of the information is the device Y, and may include direct receiving from the device Y through an air interface, or indirect receiving from the device Y from another unit or module through an air interface. "Sending" may also be understood as "outputting" of a chip interface, and "receiving" may also be understood as "inputting" of a chip interface.

A communication process between an entity A and an entity B is used as an example. In this application, that the entity A sends information to the entity B may be that A directly sends the information to B, or may be that A indirectly sends the information to B via another entity. Similarly, that the entity B receives the information from the entity A may be that the entity B directly receives the information sent by the entity A, or may be that the entity B indirectly receives the information sent by the entity A via another entity. The entities A and B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

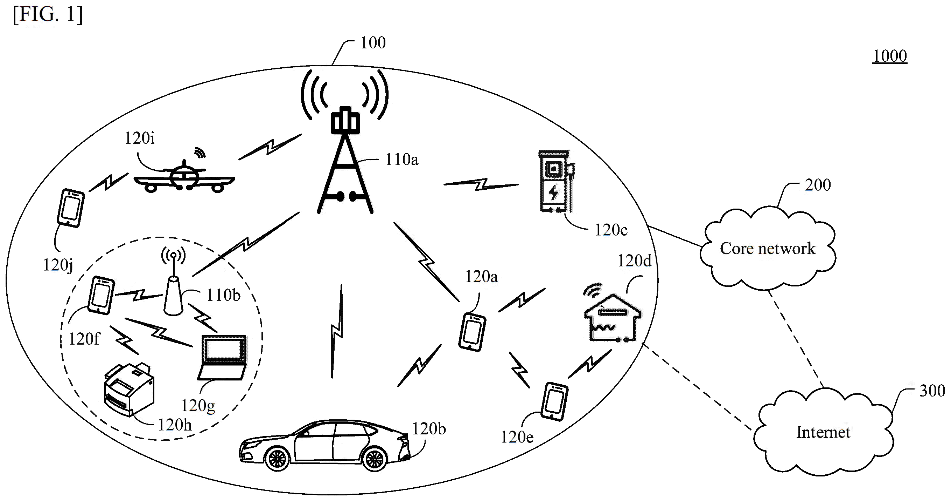

FIG. 1 is a diagram of an architecture of a communication system 1000 to which an embodiment of this application is applied. As shown in FIG. 1, the communication system includes a radio access network (radio access network, RAN) 100 and a core network 200. Optionally, the communication system 1000 may further include an internet 300. The RAN 100 includes at least one RAN node (for example, 110a and 110b in FIG. 1, collectively referred to as 110), and may further include at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The terminals may be connected to each other in a wired or wireless manner, and the RAN nodes may be connected to each other in a wired or wireless manner.

The RAN 100 may be an evolved universal terrestrial radio access (evolved universal terrestrial radio access, E-UTRA) system, a new radio (new radio, NR) system, or a future radio access system defined in a 3rd generation partnership project (3rd generation partnership project, 3GPP). The RAN 100 may alternatively include the foregoing two or more different radio access systems. The RAN 100 may alternatively be an open RAN (open RAN, O-RAN).

A RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, or a base station in a future mobile communication system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement a part of functions of a base station. For example, the RAN node may be a central unit (central unit, CU), a distributed unit (distributed unit, DU), or a radio unit (radio unit, RU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete some or a part of functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further divided into two types of RAN nodes at a CU-control plane and a CU-user plane.

In different systems, the CU (or the CU-CP and the CU-UP), the DU, or the RU may also have different names, but a person skilled in the art may understand meanings thereof. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

Communication between the access network device and the terminal device complies with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

For a correspondence between network elements in the ORAN system and protocol layer functions that may be implemented by the network elements, refer to Table 1.

**Table 1**

| ORAN network element | 3GPP protocol layer function |
|---|---|
| O-CU-CP | RRC+PCDP-control plane (PDCP-C) |
| O-CU-UP | SDAP+PCDP-user plane (PDCP-U) |
| O-DU | RLC+MAC+PHY-high |
| O-RU | PHY-low |

For ease of description, the following uses a base station as an example of the RAN node for description.

The terminal may be a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 via 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, each of 110a and 110b in FIG. 1 may be referred to as a communication apparatus having a function of a base station, and each of 120a to 120j in FIG. 1 may be referred to as a communication apparatus having a function of a terminal.

Communication between the base station and the terminal, between base stations, or between terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios, such as smart grid, industrial control, smart transportation, and smart city. A function of the terminal may alternatively be performed by a module (for example, a chip or a modem) in the terminal, or may be performed by an apparatus including the function of the terminal.

Optionally, main functions of a core network are to provide a user connection, manage a user, complete service carrying, and act as a bearer network to provide an interface to an external network. Establishment of user connections includes mobility management (MM, Mobility Management), calling management (CM, Calling management), switching/routing, recording notification (completing a connection relationship to intelligent network peripherals in combination with an intelligent network service), and other functions. The user management includes user descriptions, QoS (where descriptions of user service QoS are added), user communication accounting (Accounting), a VHE (virtual home environment (virtual home environment)) (providing a virtual home environment through a conversation with an intelligent network platform), and security (where an authentication center provides corresponding security measures, including security management for mobile services and security processing for external network access). The bearer connection (Access to) includes an external PSTN (public switched telephone network, public Switched Telephone Network), an external circuit data network and a packet data network, an internet (internet) and an intranet (intranet), a mobile SMS (Short Message Service, short message service) server, and the like. A basic service that can be provided by the core network includes mobile office, e-commerce, communication, an entertainment service, travel and location-based services, a telemetry (Telemetry) service, a simple message transfer service (monitoring and control), or the like.

It should be noted that this application may be applied to a long term evolution (long term evolution, LTE) system, a new radio (new radio, NR) system, or a communication system (for example, 6G or 7G) evolved after 5G.

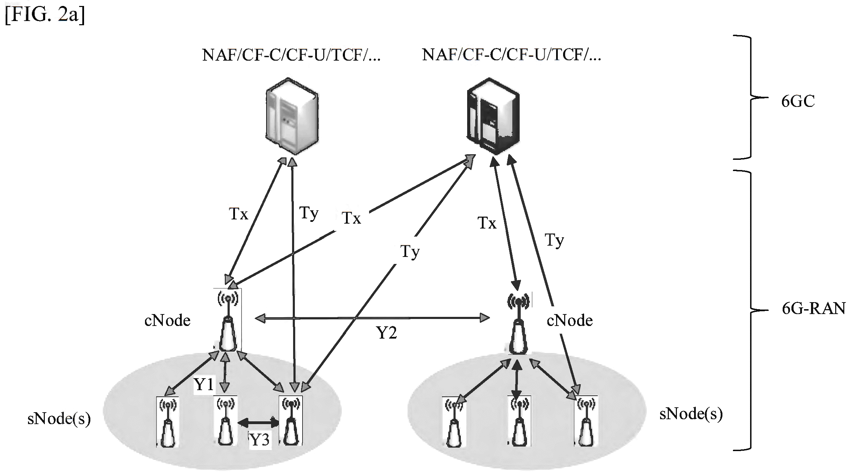

In an example, in an example shown in FIG. 2a, a 6G system is used as an example. The 6G system may include a 6G core network (6GC), a 6G radio access network (6G-RAN), and the like. To facilitate task processing, the 6G-RAN may include one or more cluster nodes (cluster Node, cNode), one or more service nodes (service Node, sNode), and the like. For example, the cNode is a region-level central coordination node of a plurality of service nodes, and provides a task-related signaling exchange function. The sNode is a service node, and provides a task scheduling and execution function.

Optionally, the 6GC may include core network elements/core network devices such as a network access function (network access function, NAF), a connection function control (connection function control, CF-C), a connection function user (connection function user, CF-U), and a task anchor function (task control function, TCF).

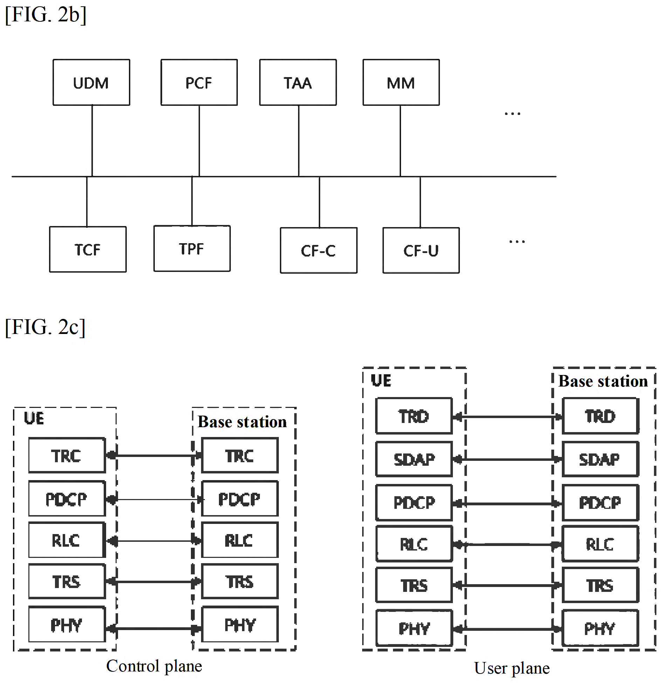

In an example, in an example shown in FIG. 2b, a 6G core network architecture may be used, and may include one or more of the following core network elements/core network devices:
a unified data management (unified data management, UDM), a PCF, a trust anchor agent (trust anchor agent, TAA), a mobility management (mobility management, MM), a TCF, a task process function (task process function, TPF), a CF-C, a CF-U, or the like.

For example, the TCF may provide a task anchor function on a core network side and the like, the TPF may provide a task scheduling and execution function on the core network side and the like, the CF-C and the CF-U may respectively provide a control plane function and a user plane function of a connection, and the MM may provide a mobility management function of UE and store location information and the like of the UE.

For example, the terminal device is UE and the network device is a base station. Different devices may communicate with each other. For example, communication between the UE and the base station, communication between base stations, and communication between the base station and a core network element (for example, the TCF) are performed. A message may be sent between the UE and the base station through a radio air interface (Uu interface), and a protocol stack of the radio air interface includes a control plane (control plane) protocol and a user plane (user plane) protocol. The control plane performs signaling exchange, and the user plane performs data exchange.

In another example, in an example shown in FIG. 2c, a control plane protocol stack and a user plane protocol stack between the UE and the base station are included. Task resource control (task resource control, TRC) on the control plane may be implemented by enhancing an RRC layer, and a control function for tasks such as AI, computing, and data processing is additionally added on the basis of an existing radio resource control function. A task resource scheduler (task resource scheduler, TRS) on the user plane may be evolved by enhancing a MAC layer. For example, a computational power scheduling function is additionally added to an existing air interface resource scheduling function on the MAC layer. In addition, a task resource data (task resource data, TRD) layer may be added above an SDAP layer, to provide functions such as task-related AI training/inference/model processing (compression/pruning/quantization/security/...).

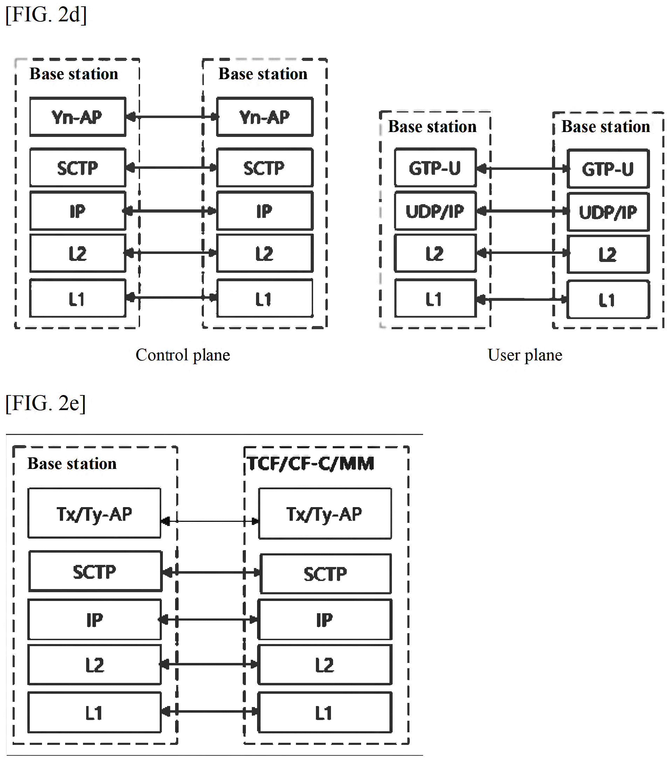

In another example, a communication protocol stack between base stations is shown in FIG. 2d, and a communication interface between 6G base stations may be a Yn interface.

In another example, communication interfaces between the 6G base station and the TCF, the CF-C, and the MM in the core network are Tx and Ty interfaces, and a protocol stack of the communication interfaces is shown in FIG. 2e.

In a 6G wireless communication network, in addition to a conventional connectivity service, another service may be provided, for example, XaaS, including one or more of NaaS, CaaS, AIaaS, and DaaS. AIaaS is used as an example, and includes but is not limited to model training, model inference, model verification, and the like. To support AIaaS, the communication network may need to efficiently and collaboratively schedule heterogeneous resources of four elements (connection, computing, data, and models). Generally, at a 6G network layer, a process of completing a specific target through multi-dimensional resource coordination is defined as a "task".

In a task-centric architecture, a TA and a TE are introduced. The TA is responsible for task lifecycle management, and completes task deployment, startup, deletion, modification, monitoring, and the like based on task QoS requirements, and controls network resources to ensure task QoS. The TE is responsible for specific execution of a task, and performs data exchange in service logic. A task trigger source sends a task request to the TA, and the TA deploys a task on one or more TEs for execution.

For example, to implement service decoupling, the TA and the TE may be independently deployed in both the core network (core network, CN) and a RAN. For example, on the core network side, the TCF provides a TA function, and the TPF provides a TE function. On the RAN side, the cNode provides the TA function, and the sNode provides the TE function.

Optionally, for the four elements, namely, connection, computing, data, and algorithms, for the TCF that provides the TA function on the core network side and the cNode that provides the TA service on the access network side, a data controller (data controller, DC) may manage and control task data resources; a computing controller (computing controller, CC) manages and controls task compute resources; a heterarchical intelligent collaboration controller (heterarchical intelligent collaboration controller, HicC) manages and controls algorithm resources of tasks; and a network controller (network controller, NC) manages and controls connection resources of the tasks, including execution of establishment, addition, deletion, modification, and the like of inter-executor connection paths.

For example, for the TPF that provides the TE function on the core network side and the sNode that provides the TE function on the access network side, a data agent (data agent, DA) is responsible for specific execution of data tasks; a computing executor (computing executor, CE) is responsible for specific execution of compute tasks; and a heterarchical intelligent collaboration agent (heterarchical intelligent collaboration agent, HicA) is responsible for specific execution of algorithm tasks.

Therefore, after other services in addition to the connectivity service are introduced into 6G, new services may no longer take PDU sessions as management objects, but may be evolved to take task sessions as management objects, thereby enabling lifecycle management at a task granularity.

In terms of application scenarios of AIaaS, from a large perspective, there may be two basic scenarios: network for artificial intelligence (network for AI, NET4AI) and artificial intelligence for network (AI for network, NET4AI).

For example, NET4AI is actually a scenario in which an OTT serves as a service provider, a network serves as a service enabler, and a terminal user or a third party serves as a consumer. In this scenario, the network needs service requirements of the OTT and also needs subscription and registration information of the terminal user as an input for generating a QoS policy. In contrast, in the AI4NET scenario, AIaaS is entirely dedicated to serving the network. In other words, the network has three identities: service provider, service enabler, and consumer. In the AI4NET scenario, the service provider may be an operator, and each node in the network may play a role of a service enabler or a role of a consumer, or each node may play a role of an enabler in one AI service and play a role of a consumer in another AI service.

Currently, in new radio (new radio, NR) scenarios, data transmission is intended to provide connectivity services for terminal devices. For example, a communication network may provide connectivity services for terminal devices through a PDU session. Correspondingly, a control policy determined by a PCF is mainly used to configure transmission requirements of communication links between different communication devices in the PDU session, including a communication link between a terminal device and an access network device, a communication link between the access network device and a user plane function network element, and the like.

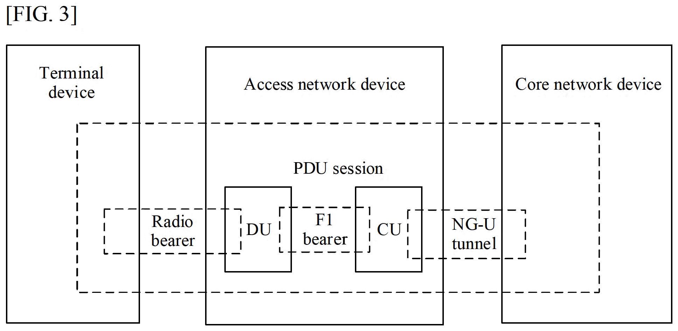

For example, FIG. 3 is a diagram of an implementation of a PDU session. Establishment of the PDU session depends on participation of a core network device. Generally, one PDU session includes a radio bearer between a terminal device and an access network device, and a next generation user plane (next generation user plane, NG-U) tunnel (tunnel) between the access network device and the core network device. Optionally, when the access network device includes a DU and a CU, the PDU session further includes an F1 bearer (bearer) between the DU and the CU.

For example, a session management function (session management function, SMF) network element in the core network device may control and manage a lifecycle of a PDU session (including establishment, deletion, modification, and the like of the PDU session) based on a service type of a user (a service type identifier is a data network name (data network name, DNN)) and a corresponding data transmission requirement policy (the policy, for example, a service transmission QoS policy or a charging policy of the PCF, is stored in a core network element), and configure a parameter for the PDU session based on the service QoS policy. In addition, in a PDU session establishment process, the terminal device may initiate PDU session establishment to the SMF network element based on a non-access stratum (non-access stratum, NAS) message. Then, the SMF network element may establish the PDU session, determine related configuration information, and indicate the access network device to establish and configure the corresponding PDU session. Correspondingly, the access network device performs processing related to the PDU session, including creating or modifying a radio bearer (for example, a data radio bearer (data radio bearer, DRB)) of a radio air interface.

However, with the development of communication networks, services provided by the communication networks may no longer be limited to connectivity services. Correspondingly, such services are no longer provided in the form of a PDU session. As a result, the control policy determined by the PCF becomes inapplicable.

For example, as described above, a difference between the AI4NET and NET4AI scenarios further lies in that, an information input for QoS policy generation may no longer come from outside the network, but from various nodes inside the network. Therefore, whether a policy generation function still needs to be located on a core network side is a problem that needs to be resolved. In particular, it is considered that the specific implementation of the policy generation function is greatly different from that of the PCF on the core network side. Therefore, in the AI4NET scenario, there is a need for a mechanism different from the mechanism for generating and delivering the policy by the PCF based on the PDU session. In addition, although the two different application scenarios have different policy generation and delivery mechanisms, same network resources are scheduled in the two scenarios. When different AI tasks in the NET4AI and AI4NET scenarios need to be processed in a queue, the queue cannot be implemented if there is no unified indicator system. Therefore, a QoS architecture needs to adapt to two different scenarios: NET4AI and AI4NET, and also adapt to a unified QoS indicator system. In addition, the QoS indicator system needs to perform higher-level abstraction and finer-grained division for the two different scenarios: AI4NET and NET4AI.

Therefore, in contrast to the current network that provides only the connectivity service, when a service (for example, XaaS) other than the connectivity service is introduced into the communication network, a current QoS indicator system cannot meet a requirement of a new service, and a new QoS indicator is required to adapt to different services provided by the communication network. For example, the service provided by the communication network is no longer a single connectivity service, and a paradigm of distinguishing between different service types based on different underlying parameters of different connections fails. AIaaS is used as an example. Underlying parameters of services such as a model inference service, a model training service, and a data service of AIaaS are entirely different. Therefore, the QoS indicator system needs to be redesigned to resolve a problem of service division. For another example, after another service is introduced into the communication network, a control object of a QoS indicator is changed from a "session" to a "task". Therefore, the QoS indicator system may need to be improved to adapt to control of tasks.

To resolve the foregoing problem, this application provides a quality of service management method and a related apparatus. The following describes the method and the apparatus in detail with reference to the accompanying drawings.

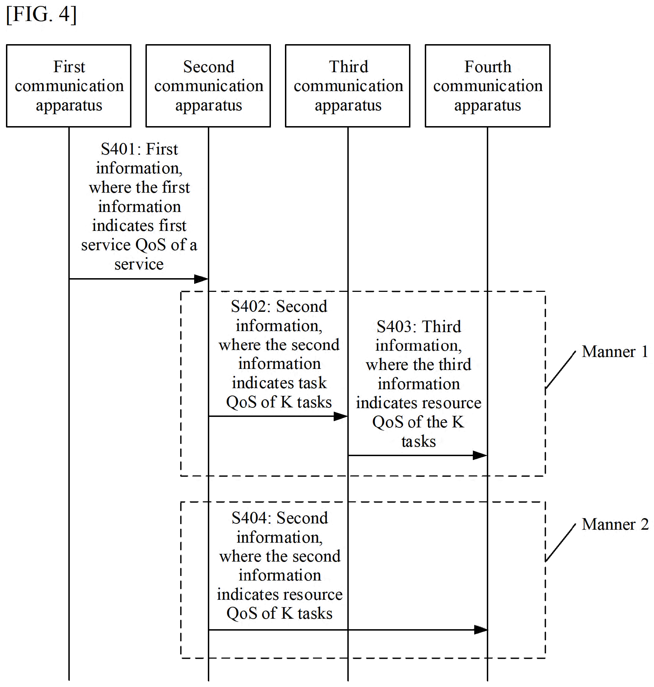

FIG. 4 is a diagram of a quality of service management method according to this application. The method includes the following steps.

It needs to be noted that in FIG. 4, the method is illustrated by using an example in which different communication apparatuses are used as execution bodies of the interaction illustration. However, the execution bodies of the interaction illustration are not limited in this application. For example, in FIG. 4 and a corresponding implementation, any communication apparatus may be a communication device (for example, a terminal device or a network device), or any communication apparatus may be a chip, a chip system, a processor, a logic module, software, or the like in a communication device.

Optionally, when the communication apparatus is an ORAN network element, the communication apparatus may be a near-real-time intelligent controller (Near-Real-time RAN intelligent controller, Near-RT RIC) functional entity, or may be an O-CU-CP.

S401: A first communication apparatus sends first information, and correspondingly, a second communication apparatus receives the first information. The first information indicates first service QoS of a service. An output of the service includes at least one first-type output, and the first service QoS of the service includes QoS of the service and QoS of all or part of the at least one first-type output.

In this application, the service may be XaaS. For example, the service may include at least one of NaaS, CaaS, SaaS, AIaaS, and DaaS.

Optionally, the service may further include another service, for example, another type of service that may appear or be defined in a future network.

It should be understood that the first communication apparatus is a communication apparatus that determines the service QoS. For example, the first communication apparatus may be a PCF network element, or the first communication apparatus may be a network element/device (for example, an access network element/access network device) having a PCF function.

It should be noted that the output of the service including the at least one first-type output may be understood as follows: service data output by a service provider to a service consumer includes the at least one first-type data. For example, when the service includes an AI service, the service data output by the service provider may include three types of first-type data: an AI inference result, an AI model parameter, and an AI training sample. In other words, an output of the AI service may include all or part of three first-type outputs: the AI inference result, the AI model parameter, and the AI training sample.

In a possible implementation, in step S401, the first communication apparatus may send the first information in a plurality of manners. The following provides descriptions by using some implementation examples.

Example 1: In step S401, the first communication apparatus sends the first information to a UDR. The UDR may be configured to store data, so that another apparatus (for example, the second communication apparatus) can subsequently obtain the service QoS through the UDR.

Optionally, a network element used for data storage may be the UDR, or may be replaced with another network element/device, for example, another network element/device defined in a future standard. This is not limited herein.

Example 2: In step S401, after the first communication apparatus determines one or more second communication apparatuses based on orchestration information of the service, the first communication apparatus sends the first information to the one or more second communication apparatuses in step S401.

In other words, in Example 2, before step S401, the method further includes: The first communication apparatus receives the orchestration information of the service from a fifth communication apparatus, where the orchestration information is used to determine the second communication apparatus. The orchestration information received by the first communication apparatus may indicate coordinated scheduling between tasks corresponding to the service. Correspondingly, the first communication apparatus may determine, based on the orchestration information, the second communication apparatus corresponding to each task, so that the first communication apparatus sends all or part of the first information to the second communication apparatus that is indicated by the orchestration information and that participates in task processing.

It should be understood that the fifth communication apparatus is a communication apparatus that determines the orchestration information of the service based on the service QoS. The fifth communication apparatus may be a NAMO, or the second communication apparatus may be a network element/device having a NAMO function or the like.

Optionally, the NAMO may be responsible for coarse-grained orchestration (including data, computing, algorithm, and connection orchestration) and decomposition of a service, and decompose the service into a plurality of tasks with dependency relationships based on service logic and a service level agreement (service level agreement, SLA) requirement, that is, generate a task computing graph and a task QoS requirement, and estimate a resource requirement of each task. Then, the tasks are assigned to different task anchors for management and control. For example, the NAMO may be responsible for providing the XaaS service externally.

Optionally, in Example 2, the first communication apparatus may obtain the orchestration information, that is, the first communication apparatus may determine tasks executed by the one or more second communication apparatuses. Therefore, the first communication apparatus may send, to the one or more second communication apparatuses, service QoS corresponding to the respective tasks, that is, the first communication apparatus may send all or part of the first information to each of the one or more second communication apparatuses in step S401, so that each second communication apparatus can obtain service QoS corresponding to a task of the second communication apparatus, thereby reducing overhead.

Example 3: In step S401, the first communication apparatus sends the first information to one or more second communication apparatuses managed by/controlled by/connected to the first communication apparatus. Subsequently, one or more second communication apparatuses that execute one or more tasks corresponding to the service may be determined in a manner of mutual interaction between different second communication apparatuses. In this manner, the first communication apparatus may not need to determine the second communication apparatus based on orchestration information, so that implementation complexity of the first communication apparatus can be reduced.

In a possible implementation, before the first communication apparatus sends the first information in step S401, the method further includes: The first communication apparatus sends indication information that indicates second service QoS of the service; and the first communication apparatus receives second request information, where the second request information is used to request to update the second service QoS, and the first service QoS of the service is determined based on a service requirement of the service and the second service QoS. Specifically, the first communication apparatus may further send the second service QoS of the service. In addition, when a current resource does not satisfy the second service QoS (for example, the second communication apparatus determines that the current resource does not satisfy the second service QoS, and consequently task QoS cannot be generated, or a fifth communication apparatus determines that the current resource does not satisfy the second service QoS, and consequently the orchestration information cannot be generated), the first communication apparatus may receive the second request information used to request to update the second service QoS, and perform update based on the service requirement and the second service QoS, so that the first communication apparatus obtains the first information indicating the first service QoS and sends the first information in step S401.

In a possible implementation, before the first communication apparatus sends the first information in step S401, the method further includes: The first communication apparatus receives subscription information of the service from an EMF, where the first service QoS of the service is determined based on the service requirement of the service and the subscription information of the service. Specifically, the first communication apparatus may determine the first service QoS of the service based on the service requirement of the service and the subscription information indicated by the EMF, so that a data transmission process implemented subsequently by another node based on the first service QoS can satisfy the service requirement of the service and subscription content indicated by the subscription information.

Optionally, the subscription information of the service includes at least one of the following: a node type, a subscription service type, and service priority information. For example, the node type may include a terminal device, a network device (for example, when various forms of base stations in the future, such as CU/DU separation, CP/UP separation, ORAN, and the like, are considered, although the network device is a RAN node, there may be a plurality of specific types of network devices), and the like. For another example, the subscription service type may include one or more of NaaS, CaaS, AIaaS, and DaaS. For another example, the service priority information may indicate a priority of a service defined by the network device or an operator.

Optionally, the EMF may be configured to maintain service subscription information of each node in a network and capability information of each node. For example, the nodes herein include a relatively static network element and a relatively dynamic terminal device. These nodes may be consumers or enablers of an AI service, or may be consumers of one AI service and enablers of another AI service. As described above, the service subscription information includes the node type, the subscription service type, the service priority information, and the like. The node capability information includes a node type, a four-element resource level, a heterogeneous resource type, and the like. Correspondingly, when the first communication apparatus generates a QoS policy, the first communication apparatus may invoke the service subscription information of each node of the EMF and the capability information of each node. Optionally, the EMF may further maintain a table of mapping between the second communication apparatus and the first communication apparatus.

Optionally, in addition to obtaining the service subscription information through the EMF, the first communication apparatus may obtain the service subscription information in another manner. For example, the first communication apparatus may obtain the service subscription information through a network element like an SMF or a UDR.

In a possible implementation, before the second communication apparatus receives the first information from the first communication apparatus in step S401, the method further includes: The second communication apparatus receives fourth request information, where the fourth request information is used to request the service, and the fourth request information includes a service identifier of the service; then, the second communication apparatus sends fifth request information to the EMF based on the fourth request information, where the fifth request information is used to request the service; and correspondingly, the second communication apparatus receives an identifier or an address of the first communication apparatus from the EMF. Specifically, after the second communication apparatus receives the fourth request information used to request the service, the second communication apparatus may send, based on the fourth request information, the fifth request information used to request the service, and obtain the identifier or the address of the first communication apparatus indicated by the receiver of the fifth request information, so that the second communication apparatus can determine the first communication apparatus that provides the service QoS. Subsequently, the second communication apparatus may request the service QoS of the service from the first communication apparatus based on the identifier or the address of the first communication apparatus, so that the first communication apparatus sends, to the second communication apparatus in step S401 based on the request, the first information indicating the first service QoS of the service.

It should be noted that the service data of the service is provided at least through K tasks, where K is a positive integer. For the second communication apparatus, after the second communication apparatus receives the first information indicating the first service QoS in step S401, the second communication apparatus may send second information indicating task QoS of the K tasks (for example, Manner 1 in step S402 in FIG. 4) or resource QoS of the K tasks (for example, Manner 2 in step S404 in FIG. 4). A service type of a service provided by a communication network may not be limited to a connectivity service. Because the QoS that is of the service and that is included in the first service QoS may indicate requirements (or overall requirements) of services of different service types, the QoS that is of the at least one first-type output and that is included in the first service QoS may indicate a requirement of an output of a specific type of service. In this way, the service QoS indicated by the first communication apparatus can be used as a control policy for a plurality of service types, and the second communication apparatus can implement service requirement assurance and service output requirement assurance based on the task QoS and the resource QoS that are indicated by the second information.

The following describes examples of a plurality of implementations of the second information.

### Manner 1

S402: The second communication apparatus sends the second information, and correspondingly, the second communication apparatus receives the second information. The second information indicates the task QoS of the K tasks, and the task QoS of the K tasks is determined based on the first service QoS of the service.

S403: The third communication apparatus sends third information, and correspondingly, a fourth communication apparatus receives the third information. The third information indicates the resource QoS of the K tasks, and the resource QoS of the K tasks is determined based on the task QoS of the K tasks.

It should be understood that, in Manner 1, the second communication apparatus is a communication apparatus that determines the task QoS based on the service QoS. For example, the second communication apparatus may be a TA, or the second communication apparatus may be a network element/device (for example, an access network element/access network device) having a TA function.

It should be understood that the third communication apparatus is a communication apparatus that determines the resource QoS based on the task QoS. For example, the third communication apparatus may be a TS, or the third communication apparatus may be a network element/device (for example, an access network element/access network device) having a TS function.

In Manner 1, the second information received by the third communication apparatus in step S402 may indicate the task QoS of the K tasks. Then, the third communication apparatus may determine, in step S403 based on the task QoS of the K tasks, the third information indicating the resource QoS of the K tasks, and send the third information. A subsequent receiver of the third information can perform processing based on the resource QoS of the K tasks. In this way, resource QoS of a subtask of each task can be determined, so that the receiver of the third information can perform processing based on the resource QoS of the K tasks, and subsequent service data can be used to implement resource requirement assurance of each subtask.

In a possible implementation of Manner 1, in step S402, the second information sent by the second communication apparatus may indicate the task QoS of the K tasks, and an output of each of the K tasks includes at least one second-type output. Correspondingly, task QoS of each task includes QoS of each task and QoS of all or part of the at least one second-type output. In this way, the second communication apparatus can implement task requirement assurance and task output requirement assurance based on the task QoS indicated by the second information.

It should be noted that the output of the task including at least one second-type output may be understood as follows: task data output by a task execution node is provided through all or part of at least one second-type resource. For example, when the task includes an AI inference task, the task data output by the task execution node may include data provided through three types of second-type resources: a data resource, a compute resource, and an algorithm resource. In other words, an output of the AI inference task may be all or part of data provided through a plurality of second-type resources such as the data resource, the compute resource, and the algorithm resource.

In a possible implementation of Manner 1, in step S402, the second information sent by the second communication apparatus may indicate the resource QoS of the K tasks, each of the K tasks includes one or more subtasks, and the resource QoS of the K tasks includes resource QoS of the one or more subtasks; and the resource QoS of the K tasks is determined based on the task QoS of the K tasks. In this way, the resource QoS of the subtasks of each task can be determined, so that subsequent service data can be used to implement resource requirement assurance of each subtask.

### Manner 2

S404: The second communication apparatus sends the second information, and correspondingly, the second communication apparatus receives the second information. The second information indicates the resource QoS of the K tasks, and the resource QoS of the K tasks is determined based on the first service QoS of the service.

It should be understood that, in Manner 2, the second communication apparatus is a communication apparatus that determines the resource QoS based on the service QoS. For example, the second communication apparatus may be a TA having a TS function, or the second communication apparatus may be a network element/device (for example, an access network element/access network device) having a TA function and the TS function.

In Manner 2, the second communication apparatus sends, in step S404, the second information indicating the resource QoS of the K tasks, and a subsequent receiver of the second information can perform processing based on the resource QoS of the K tasks. In this way, resource QoS of a subtask of each task can be determined, so that the receiver of the third information can perform processing based on the resource QoS of the K tasks, and subsequent service data can be used to implement resource requirement assurance of each subtask.

In a possible implementation of Manner 2, in step S404, the second information sent by the second communication apparatus may indicate the resource QoS of the K tasks, each of the K tasks includes one or more subtasks, and the resource QoS of the K tasks includes resource QoS of the one or more subtasks; and the resource QoS of the K tasks is determined based on the task QoS of the K tasks. In this way, the resource QoS of the subtasks of each task can be determined, so that subsequent service data can be used to implement resource requirement assurance of each subtask.

Optionally, in Manner 1 or Manner 2, one or more types of resources may include a connection resource, a compute resource, a data resource, an algorithm resource (or a model resource), or the like.

Optionally, in Manner 1 or Manner 2, resource QoS of each subtask includes one or more QoS characteristics and a QoS parameter corresponding to each QoS characteristic.

In a possible implementation, the service data of the service is provided at least through the K tasks, where K is the positive integer. In Manner 1 or Manner 2, after the second communication apparatus receives, in step S401, the first information indicating the first service QoS of the service, the second communication apparatus determines the task QoS based on the first service QoS (optionally, in Manner 1, the second communication apparatus may further determine the resource QoS based on the task QoS). The task QoS of the K tasks is determined based on the service QoS of the service and at least one of the following information A and information B.

### Information A: orchestration information of the service

Specifically, in addition to the service QoS of the service, a determining basis for determining the task QoS by the second communication apparatus may include the information A, namely, the orchestration information of the service. In this manner, the second communication apparatus can implement coordinated scheduling between tasks determined based on the orchestration information, to determine the task QoS of each task.

In a possible implementation, when the determining basis for determining the task QoS of the K tasks includes the information A, the second communication apparatus may determine the information A in a plurality of manners. The following provides descriptions with reference to some implementation examples.

In an implementation example, after step S401, the method further includes: The second communication apparatus receives the orchestration information of the service from the fifth communication apparatus. The orchestration information may indicate coordinated scheduling between the tasks corresponding to the service, to determine, based on the orchestration information, the task QoS corresponding to each task.

Optionally, for the fifth communication apparatus, before the fifth communication apparatus determines the orchestration information of the service, the fifth communication apparatus may receive the first information from the first communication apparatus, where the first information may indicate the first service QoS of the service, and the fifth communication apparatus may determine the orchestration information of the service based on the first service QoS, so as to indicate coordinated scheduling between the tasks based on the orchestration information.

Optionally, before the first communication apparatus sends the first information to the fifth communication apparatus, the method further includes: The first communication apparatus receives first request information from the fifth communication apparatus, where the first request information is used to request the first information, and the first request information includes the service identifier of the service. The first request information may include the service identifier of the service. In this way, the solution can be applied to a scenario in which the fifth communication apparatus initiates a request to obtain the service QoS.

In the foregoing implementation example, for the second communication apparatus, before the second communication apparatus receives the orchestration information (for example, first orchestration information) of the service from the fifth communication apparatus, the method further includes: The second communication apparatus receives second orchestration information of the service from the fifth communication apparatus; and the second communication apparatus sends third request information to the fifth communication apparatus, where the third request information is used to request to update the second orchestration information. Specifically, the second communication apparatus may further receive the second orchestration information of the service, and when a current resource does not satisfy the second orchestration information (for example, the second communication apparatus determines that the current resource does not satisfy task coordinated scheduling indicated by the second orchestration information), the second communication apparatus may send the third request information used to request to update the second orchestration information, and obtain updated first orchestration information.

In another implementation example, after step S401, the method further includes: The second communication apparatus determines the orchestration information of the service based on the service QoS of the service. In this manner, the second communication apparatus may locally determine the orchestration information of the service, to reduce overhead.

### Information B: task QoS template

Specifically, in addition to the service QoS of the service, the determining basis for determining the task QoS by the second communication apparatus may include the task QoS template. In this manner, the task QoS can be quickly determined, thereby reducing a processing latency.

In a possible implementation, the task QoS template satisfies at least one of the following:
the task QoS template is determined based on device information of one or more third communication apparatuses connected to the second communication apparatus;
the task QoS template is determined based on service QoS of a service historically processed by the second communication apparatus, orchestration information of the historically processed service, and historically processed task QoS; or
the task QoS template is determined based on feedback information on the historically processed task QoS from the one or more third communication apparatuses connected to the second communication apparatus.

Therefore, the task QoS template used to determine the task QoS may be implemented in any one of the foregoing, to improve flexibility of implementing the solution.

Based on the technical solution shown in FIG. 4, the first information determined by the first communication apparatus and sent in step S401 indicates the first service QoS. The first service QoS includes the QoS of the service and the QoS of all or part of the at least one first-type output included in the output of the service. The service type of the service provided by the communication network may not be limited to the connectivity service. Because the QoS that is of the service and that is included in the first service QoS may indicate requirements (or overall requirements) of services of different service types, the QoS that is of all or part of the first-type output and that is included in the first service QoS may indicate a requirement of an output of a specific type of service. In this way, the service QoS indicated by the first communication apparatus can be used as a control policy for a plurality of service types, and a receiver of the service QoS can implement service requirement assurance and service output requirement assurance based on the service QoS.

It can be learned from the implementation process shown in FIG. 4 that, in comparison with a scenario in which the communication network provides only a communication service, in the process in which the communication network provides XaaS, generation and delivery processes of a plurality of types of QoS, including service QoS, task QoS, and resource QoS, may be performed between different communication apparatuses. The following describes the QoS by using some examples.

### (1) Service QoS

Specifically, after a new service is introduced into the communication network, new services that need to be added to the network may include: model inference/model training/model generation/model optimization/data service/computing service, and the like. The service QoS essentially quantifies requirements of the foregoing new service types. Different service types may provide different service output results, but are represented by a same service QoS indicator. Therefore, the service QoS indicator is structurally divided into two levels. The first level is an overall level, that is, a unified abstraction for all service types (namely, the service QoS may include the QoS of the service). The second level is an output-object level. Different service types have different output objects. For example, for an inference service, an output object is an inference result, and for a training service, an output object is a model. Different output objects correspond to different service QoS requirements (that is, the output of the service includes the at least one first-type output, and the service QoS of the service includes the QoS of all or part of the at least one first-type output).

For example, an implementation example of the service QoS of the service is shown in Table 2. The service QoS at the first level may include one or more rows of information included in "Overall" in Table 2, and the service QoS at the second level may include one or more rows of information included in "Output object" in Table 2.

**Table 2**

| Service QoS | | | Definition |
|---|---|---|---|
| Overall | | Service response latency | Time required from service request initiation to closed-loop completion |
| | | System energy efficiency | Total service energy consumption |
| | | Availability | Quantity of execution nodes invoked by the service |
| | | Service density | Total quantity of parallel service tasks |
| | | Service waiting time | Service waiting latency |
| Output object | Inference result | Inference accuracy | Precision (precision) of an inference result of a given dataset |
| | Model parameter | Model scale | Order of magnitude of model parameters |
| | | Model convergence | Learning rate, training time, parameter smoothness, and the like |
| | Data flow | Sampling rate | Quantity of samples per unit time (for example, per second) |

Optionally, the service QoS may be generated at the first communication apparatus (for example, the first communication apparatus may include a PCF at a CN side in a NET4AI scenario and a PCF at a RAN side in an AI4NET scenario), and may be output to the second communication apparatus (for example, the TA described above) and the fifth communication apparatus (for example, the NAMO described above) for use.

### (2) Task QoS

Specifically, implementation of one service generally depends on implementation of at least two tasks. Certainly, if the service is small in scale, only one task may be required to implement the service. From a perspective of elements, a task, like a service, may include a plurality of elements. Therefore, it may be considered that the task is a lightweight task. The necessity of the task is achieved based on real-time performance of a control plane, which is achieved by deploying control nodes closer to lower layers of the network, and by adopting a deployment pattern characterized by a tendency of large-scale distribution and single-point centralization. Therefore, a specific task is defined at a control node (for example, the TA) of a mobile network. For example, the definition process may be based on orchestration information provided by the NAMO on a management plane, or directly based on orchestration information determined by the TA locally, or orchestration information jointly obtained by the NAMO on the management plane and the TA on the control plane.

In addition, the process of defining the specific task is also a process of defining task QoS. From a process perspective, the definition of the task QoS is divided into three steps. In the first step, an overall QoS requirement that is of a service and that is in service QoS guides orchestration of a specific service instance into tasks. In the second step, a manner in which the service instance is orchestrated into individual specific tasks determines a mapping relationship between an overall requirement part in the service QoS and an overall requirement part in the task QoS (which is referred to as first-level task QoS, namely, the QoS of each task described above). In the third step, requirements in the service QoS for output objects are actually directly inherited by the task QoS and are allocated to different weights and four-element resource levels of subtasks of the task (which is referred to as second-level task QoS, namely, the QoS of the at least one second-type output described above). If mapping the overall part of the service QoS to the overall part of the task QoS in the second step is a process determined by an orchestration result and the service QoS, the process of determining the subtask resource levels in the third step is a process autonomously determined by the TA based on a real-time network status.

For example, a task can be completed in a plurality of manners. For example, model training can be performed in a manner of a large amount of data with a small model, or in a manner of a large model with a small amount of data. However, collaboration and balance between the four elements are determined by the task QoS at the TA. Therefore, the relationship from the service QoS to the task QoS is not simply decomposition of indicator values. On the contrary, the task QoS also plays a key role in a QoS determining process. Rather, QoS of a specific service instance is determined by both the service QoS and the task QoS. This is fundamentally different from a policy control process of a PDU session in NR, because in the policy control process of the PDU session, the QoS has been actually determined at a PCF (for example, the 5QI has been determined in a policy and charging control rule (policy and charging control, PCC rule) and remains consistent in the entire control flow).

For example, an implementation example of the task QoS is shown in Table 3. The task QoS at the first level may include one or more rows of information included in "Overall" in Table 3, and the task QoS at the second level may include one or more rows of information included in "Orchestration" in Table 2.

**Table 3**

| Task QoS | | | Definition |
|---|---|---|---|
| Overall | | Task latency | Time required from task reception to task closed-loop completion |
| | | Task energy consumption | Total task energy consumption |
| | | Availability | Quantity of execution nodes invoked by a task |
| | | Task waiting time | Difference between a critical-path latency and a shortest-path latency in the task |
| Orchestration | Subtask resource level | Subtask weight | Relative importance of a subtask of the same task |
| | | Connection level | Level of a connection resource invoked by the subtask |
| | | Computation level | Level of a compute resource invoked by the subtask |
| | | Data level | Level of a data resource invoked by the subtask |
| | | Algorithm level | Level of an algorithm resource invoked by the subtask |

Optionally, the task QoS may be generated at the second communication apparatus (for example, the TA) and provided for the third communication apparatus (for example, the TS) for use.

### (3) Resource QoS

Specifically, the resource QoS may be obtained by decomposing the task QoS. For example, resource QoS characteristics (characteristics) are obtained based on the subtask weight and the resource level. Underlying logic is that, if target resource QoS is achieved, an overall requirement of the task and a requirement of the service for the output result can be achieved. This logic is consistent with the previous logic that the mobile network provides connectivity service assurance for different service types. The network ensures services by ensuring packet transmission.

In addition, the resource QoS may include one or more QoS characteristics and a QoS parameter (parameter) corresponding to each QoS characteristic. The QoS characteristic is used for classifying different subtasks/tasks, and the fourth communication apparatus (for example, the TE) refers to the one or more QoS characteristics during queue scheduling processing. The QoS parameter is used for management, and does not pertain to an individual subtask/task, but to a combination of a series of subtasks/tasks, with consideration given to a relative relationship and overall control (such as an aggregate maximum computing amount) between the subtasks/tasks. In other words, the one or more QoS characteristics in the resource QoS determine assurance content, and the QoS parameter corresponding to each QoS characteristic may be used to determine an overall assurance manner. The QoS characteristic and the QoS parameter are used together to ensure that the QoS is achieved.

For example, an implementation example of the resource QoS is shown in Table 4 below. The one or more QoS characteristics may include one or more rows of information in a column of "QoS characteristics" in Table 3, and the QoS parameter corresponding to each QoS characteristic may include one or more rows of information in a column of "QoS parameters" in Table 3.

**Table 4**

| Resource QoS | QoS parameters | QoS characteristics |
|---|---|---|
| | 6QI-communication | Resource type (resource type) |
| | Allocation and retention priority (allocation and retention priority, ARP) | Priority level (priority level) |
| | Reflective QoS attribute (reflective QoS attribute, RQA) | Packet delay budget (packet delay budget, PDB) |
| Connection | Notification control (notification control) | Packet error rate (packet error rate, PER) |
| | Flow bit rate (flow bit rate, FBR) | Maximum data burst volume (maximum data burst volume, MDBV) |
| | Aggregate bit rate (aggregate bit rate, ABR) | Averaging window (averaging window) |
| Computation | 6QI-compute | Computing type |
| | ARP | Computing priority |
| | Notification control | Computing latency |
| | Floating-point operations per second (floating-point operations per second, FLOPS) | Computing reliability |
| Data | 6QI-data | Data type |
| | ARP | Data priority |
| | Notification control | Sampling rate |
| | Input/Output operations per second (input/output operations per second, IOPS) | Storage capacity |
| | Aggregate input/output operations per second (aggregate input/output operations per second, A-IOPS) | Storage periodicity |
| Algorithm/Model | 6QI-model | Model type |
| | ARP | Training priority |
| | Notification control | Training latency |
| | Model processing latency | Model convergence |
| | Aggregate model processing latency | Inference priority |

Optionally, the resource QoS may be generated at the third communication apparatus (for example, the TS) and provided for the fourth communication apparatus (for example, the TE) for use.

To facilitate understanding of the foregoing technical solutions, the following provides some implementation examples for description. It should be understood that, in the following examples, the first communication apparatus is a PCF (a PCF deployed in a core network or a PCF deployed in an access network, where the PCF deployed in the access network may be denoted as a RAN-PCF), the second communication apparatus is a device at a TA layer, the third communication apparatus is a device at a TS layer, and the fourth communication apparatus is a device at a TE layer.

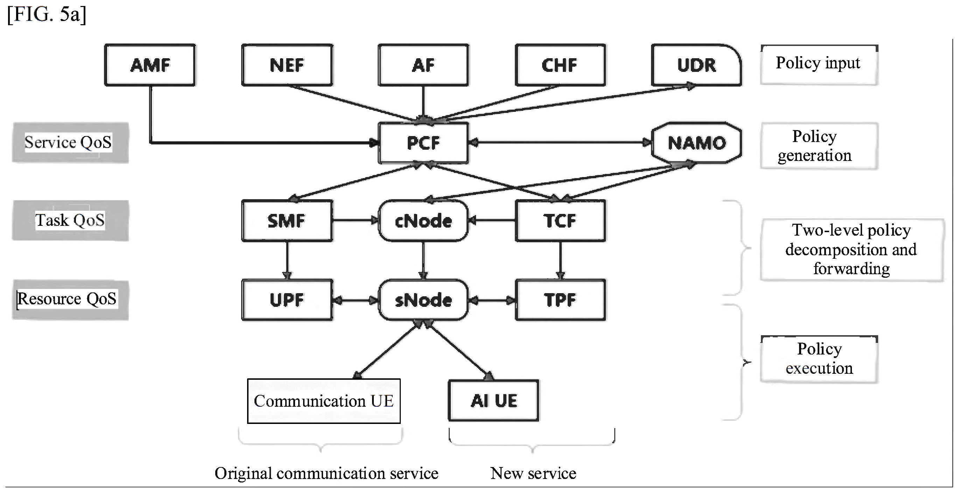

Scenario 1: FIG. 5a shows an implementation example of the NET4AI.

In Scenario 1, triggered by a terminal device or a third-party network element/device, an OTT vendor device may enter service requirement information to the PCF through an AF, thereby triggering the PCF to generate service QoS. A specific procedure includes the following steps.
1: The PCF generates the service QoS based on input information (for example, user subscription information and OTT service requirement information) of each network function (network function, NF), and transfers the service QoS to the UDR. This step is an implementation example of step S401.
2: A service requester initiates a new service and enters a use case to the NAMO. The use case includes identification information of different AI services of different applications.
3: The NAMO obtains the service QoS (status of each node, namely, the TE) from the UDR based on the identification information, completes orchestration based on the service QoS, determines a task, a workflow, and TAs, and transfers an orchestration result to each TA.
4: The TA layer (namely, a cNode) completes mapping from the service QoS to task QoS. This step is an implementation example of step S402.
5: The TS layer (for example, an sNode and a TPF) completes mapping from the task QoS to resource QoS. This step is an implementation example of step S403.
6: During execution at the TE layer (for example, the sNode, the TPF, and UE), differentiated resource allocation and queue processing are performed.

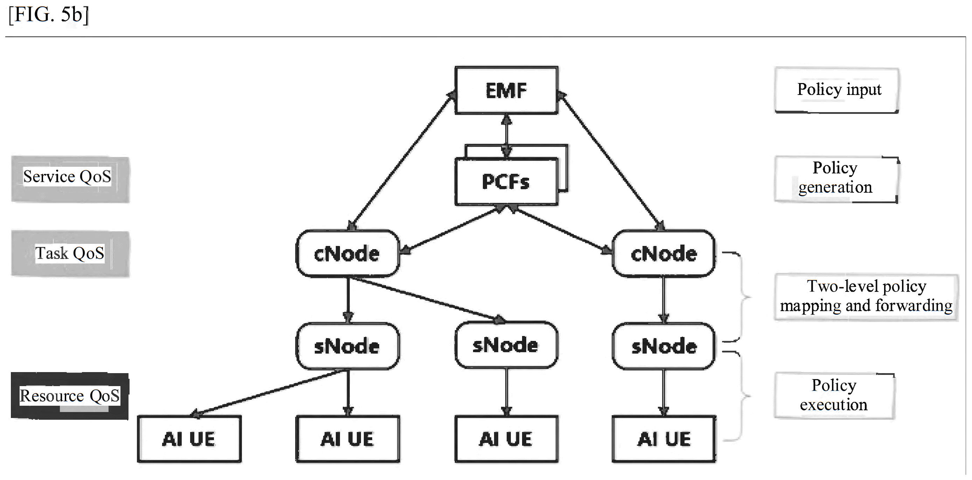

Scenario 2: FIG. 5b shows an implementation example of the AI4NET.

In Scenario 1, triggered by a terminal device or a third-party network element/device, the EMF may enter service requirement information to the PCF, thereby triggering the PCF to generate service QoS. A specific procedure includes the following steps.
1: The EMF maintains new service subscription information and node capability information of each node (including static network elements and dynamic UEs) in the network. One node can be both an enabler and a consumer of a new service.
2: Each RAN-PCF generates the service QoS based on information (requirements of different AI4NET services subscribed by the consumer and corresponding requirements) entered from the EMF.
3: When the UE or the network element triggers an AI service, the UE or the network element enters a use case to the TA (a cNode). The cNode applies to the EMF for an ID/IP of a corresponding RAN-PCF (which may be directly deployed on the cNode). The cNode obtains the service QoS from the corresponding RAN-PCF, and generates a task and corresponding task QoS based on an orchestration result. This step is an implementation example of step S401 and step S402.
4: The TS layer (an sNode) completes mapping from the task QoS to resource QoS, and sends the resource QoS to the TE layer. This step is an implementation example of step S403.
5. During execution at the TE layer (the sNode and the UE), differentiated resource allocation and queue processing are performed.

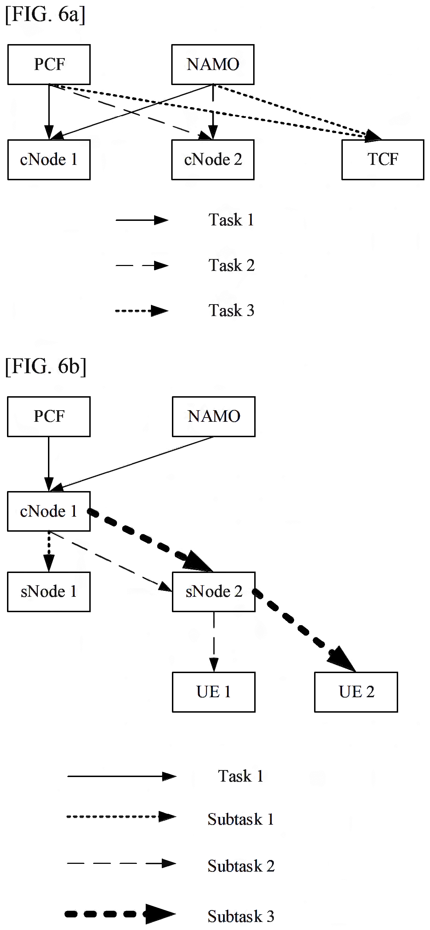

The following embodiment is a specific use case of network-assisted autonomous driving. In this use case, the network provides a model inference service (a service output object is an inference result, a model is available, and only input data and an inference process are required). A specific service procedure of network-assisted autonomous driving is described below.
(1) A terminal user initiates a request to an OTT for predicting a congestion status over a 10 km stretch of Jinhai Road.
(2) The OTT enters the use case to the NAMO on a management plane.
(3) The NAMO invokes service QoS of the PCF to complete workflow orchestration and transfers orchestration information to the TA, and the PCF sends the service QoS to the TA. This step is an implementation example of step S401.
(4) A workflow of the NAMO includes three tasks, which are respectively executed by TAs. In this example, it is assumed that the TA includes two cNodes and a TCF (namely, a cNode 1, a cNode 2, and a TCF in FIG. 6a). In addition, each TA may determine resource QoS based on the service QoS, and send the resource QoS to a TE connected to each TA. This step is an implementation example of step S404.
(5) The two cNodes perform prediction based on real-time sensing data of the UE and historical data.
(6) The TCF completes a final inference result based on the input from the cNodes and feeds back the result to the terminal user who initiates the service.

For clarity, different roles in the network are divided into the following: a consumer, a provider, and an enabler. The consumer indicates a recipient of the service provided by the network, which is the terminal user in this use case. The provider indicates an object that owns the service, where in this use case, this service belongs to the OTT. The enabler indicates an entity that provides an infrastructure and even an entire service flow to complete the service, which is an operator or the network in this use case.

In an example, FIG. 6a is a diagram of orchestration of a service instance, corresponding to step (1), step (2), and step (3) above.

In an example, a cNode 1 is used as an example. A diagram of orchestration of a task into subtasks is shown in FIG. 6b, corresponding to step (5) above.

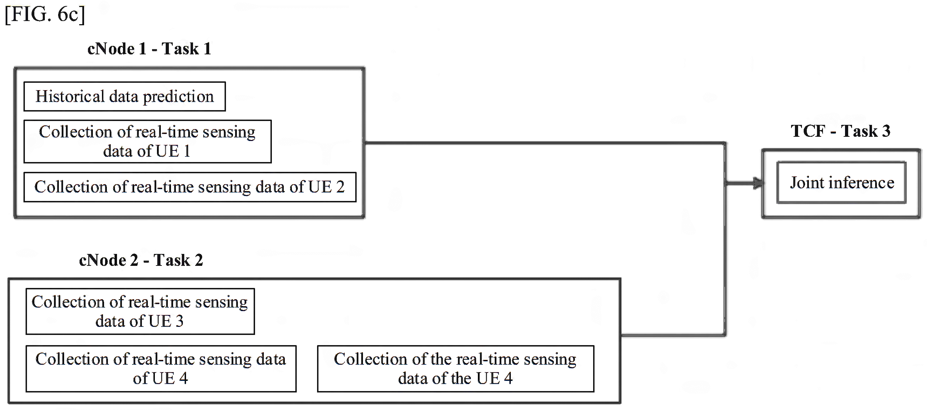

In an example, FIG. 6c is a complete service flowchart, including the following process.

A task 1 (Task1) is executed by the cNode 1 and includes historical data prediction, collection of real-time sensing data of UE 1, collection of real-time sensing data of UE 2, and the like.

A task 2 (Task2) is executed by a cNode 2 and includes historical data prediction, collection of real-time sensing data of UE 3, collection of real-time sensing data of UE 4, and the like.

A task 3 (Task3) is executed by the TCF and includes joint inference.

For example, in the example shown in FIG. 6a, a service QoS generation process includes the following steps.
1: Before the consumer triggers a service, the OTT and the operator complete formulation of an autonomous driving AI service package.
2: The terminal user has been registered, and registration information includes subscription information of an autonomous driving AI service and basic user information.
3: The PCF determines service QoS based on information (including OTT information and user information) provided by each NF, and stores the service QoS in the UDR.

For example, in the example shown in FIG. 6a, a service QoS delivery process includes the following steps.
1: The terminal user completes access and sends a real-time route congestion prediction request to an application service through an original communication connection, namely, a PDU session.
2: An application enters a use case of the real-time route congestion prediction request of the user to the NAMO.
3: The NAMO selects corresponding service QoS from the UDR based on an application identifier/a user identifier and specific content of the use case,
for example, based on the application identifier (an IP triplet of a path planning application server), or
for another example, based on UE identifier (UE ID), reporting capability information, location information, and whether UE is a VIP.

For another example, the service QoS is determined based on a specific requirement in the use case (invoking all base stations and terminal users within 10 km) (as shown in Table 5 below).

**Table 5**

| Service QoS | | | Definition |
|---|---|---|---|
| Overall | | Service response latency | 200 milliseconds |
| | | System energy efficiency | 200 KJ |
| | | Availability | 100 |
| | | Service density | - |
| | | Service waiting time | 40 milliseconds |
| Output object | Inference result | Inference accuracy | 99% |
| | Model parameter | Model scale | - |
| | | Model convergence | - |
| | Data flow | Sampling rate | 20 Hz |

4: The NAMO completes task orchestration and decomposition based on the service QoS, and transfers an orchestration result and a service QoS indicator to each TA.

For example, in the example shown in FIG. 6a, a task QoS generation process (using the cNode 1 as an example) includes:
generation of a task QoS template: This process is independent of the current service.

For example, the TA initially predefines the task QoS template (a pure template without any label) of the TA based on a type, a capability, and a quantity of covered TEs.

For another example, the TA accumulates a task QoS template (with top-down information, including the service QoS, OTT-side information, terminal-side information, and the like) during continuous acceptance of task orchestration and decomposition from the NAMO.

For another example, the TA accumulates a task QoS template (with bottom-up information, including information about xxTEs that are often overloaded and xxTEs that often consume an especially large amount of power) during continuous acceptance of feedback and change requests from the TE side.

Specific task QoS generation includes the following steps.
1: The cNode 1 computes an overall task QoS requirement based on the service QoS and the orchestration result of the NAMO workflow (by directly selecting a template or customizing a template).
2: The cNode 1 decomposes subtasks based on statuses of subordinate TEs, and determines weights and levels of the subtasks (in this use case, the subtasks include historical data inference of an sNode 1 and sampling of real-time sensing data of two sensing UEs on an sNode 2).
3: A task QoS corresponding to this use case is output. Table 6 shows a QoS table.

**Table 6**

| Task QoS | | | Task 1 | | |
|---|---|---|---|---|---|
| Overall | | Task latency | 100 milliseconds | | |
| | | Task energy consumption | 70 KJ | | |
| | | Availability | 3 | | |
| | | Task waiting time | 10 milliseconds | | |
| Orchestration | Subtask resource level | Subtask weight | 70% | 10% | 20% |
| | | Connection level | 1 | 5 | 5 |
| | | Computation level | 5 | 1 | 1 |
| | | Data level | 2 | 5 | 5 |
| | | Algorithm level | 5 | 2 | 2 |

For example, in the example shown in FIG. 6a, a task QoS delivery process includes the following step.

After the specific task QoS is generated at the TA layer (the cNode 1 in this use case), the task QoS is delivered to the TS layer (the sNode 1 and the sNode 2 in this use case).

For example, in the example shown in FIG. 6a, in a resource QoS generation process (using the sNode 1 and the UE 1 as examples), the TS layer (the sNode 1 and the sNode 2 herein) maps the task QoS to four-element resource QoS based on the task QoS (especially the subtask resource level in the task QoS), and generates a resource QoS table, as shown in the following table.

For example, in the example shown in FIG. 6a, in a resource QoS delivery process, after the resource QoS is generated, the TS delivers the resource QoS to specific TEs (the sNode 1, the sNode 2, the UE 1, and the UE 2 in this use case) that perform the task. The resource QoS may include the example shown in Table 7.

**Table 7**

| Resource QoS | QoS parameters | sNode | UE 1 |
|---|---|---|---|
| Connection | Resource type | GBR | GBR |
| | Priority level | 40 | 10 |
| | PDB | 20 milliseconds | 40 milliseconds |
| | PEB | 01001 | 0.01 |
| | MBDV | - | - |
| | Averaging window | 2000 milliseconds | 2000 milliseconds |
| Computation | Computing type | GC | Non-GC |
| | Computing priority | 10 | 50 |
| | Computing latency | 10 milliseconds | 100 milliseconds |
| | Computing reliability | 2400 h | 2400 h |
| Data | Data type | Database data | Real-time sensing data |
| | Data priority | 50 | 10 |
| | Sampling rate | - | 50 Hz |
| | Storage capacity | 5G | - |
| | Storage periodicity | 240 h | - |
| Algorithm/Model | Model type | LSTM | PCF |
| | Training priority | - | - |
| | Training latency | - | - |
| | Model convergence | - | - |
| | Inference priority | 10 | 20 |
| | Inference latency | 5 milliseconds | 10 milliseconds |
| | Inference accuracy | 0.99 | - |
| | Model openness | - | - |
| | Model autonomy | - | - |

For example, in the example shown in FIG. 6a, in a resource QoS assurance process, each TE performs queuing processing based on the resource QoS delivered by the TS.

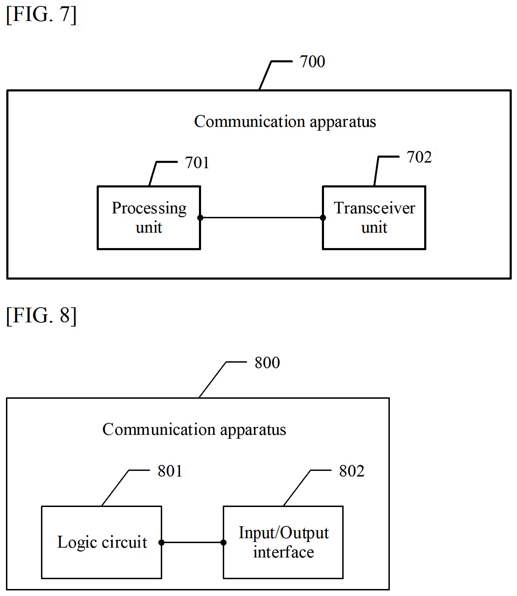

Refer to FIG. 7. Embodiments of this application provide a communication apparatus 700. The communication apparatus 700 may implement a function of the communication apparatus in the foregoing method embodiments (for example, the communication apparatus is a terminal device or a network device), and therefore can also implement beneficial effect of the foregoing method embodiments. In embodiments of this application, the communication apparatus 700 may be a communication apparatus, or may be an integrated circuit, an element, or the like in the communication apparatus, for example, a chip.

In a possible implementation, when the apparatus 700 is configured to perform the method performed by the first communication apparatus in FIG. 4 and the related embodiments, the apparatus 700 includes a processing unit 701 and a transceiver unit 702. The processing unit 701 is configured to determine first information, where the first information indicates first service QoS of a service, the service is XaaS, an output of the service includes at least one first-type output, and the first service QoS of the service includes QoS of the service and QoS of all or part of the at least one first-type output. The transceiver unit 702 is configured to send the first information.

In a possible implementation, when the apparatus 700 is configured to perform the method performed by the second communication apparatus in FIG. 7 and the related embodiments, the apparatus 700 includes a processing unit 701 and a transceiver unit 702. The transceiver unit 702 is configured to receive first information from a first communication apparatus, where the first information indicates first service QoS of a service, the service includes at least one of network as a service, computing as a service, sensing as a service, AI as a service, and data as a service, an output of the service includes at least one first-type output, and the first service QoS of the service includes QoS of the service and QoS of all or part of the at least one first-type output; and where service data of the service is provided at least through K tasks, and K is a positive integer. The processing unit 701 is configured to determine second information. The transceiver unit is further configured to send the second information. The second information indicates task QoS of the K tasks or resource QoS of the K tasks, and the task QoS of the K tasks and the resource QoS of the K tasks are determined based on the first service QoS of the service.

In a possible implementation, when the apparatus 700 is configured to perform the method performed by the third communication apparatus in FIG. 4 and the related embodiments, the apparatus 700 includes a processing unit 701 and a transceiver unit 702. The transceiver unit 702 is configured to receive second information, where the second information indicates task QoS of K tasks, the K tasks are used to provide service data of a service, K is a positive integer, and the service includes at least one of network as a service, computing as a service, sensing as a service, AI as a service, and data as a service. The processing unit 701 is configured to determine third information. The transceiver unit 702 is further configured to send the third information. The third information indicates resource QoS of the K tasks, and the resource QoS of the K tasks is determined based on the task QoS of the K tasks.

In a possible implementation, when the apparatus 700 is configured to perform the method performed by the fourth communication apparatus in FIG. 7 and the related embodiments, the apparatus 700 includes a processing unit 701 and a transceiver unit 702. The transceiver unit 702 is configured to receive third information, where the third information indicates resource QoS of a task. The processing unit 701 is configured to perform processing based on the resource QoS.

In a possible implementation, when the apparatus 700 is configured to perform the method performed by the fifth communication apparatus in FIG. 4 and the related embodiments, the apparatus 700 includes a processing unit 701 and a transceiver unit 702. The transceiver unit 702 is configured to receive first information, where the first information indicates first service quality of service QoS of a service, the service includes at least one of network as a service, computing as a service, sensing as a service, artificial intelligence AI as a service, and data as a service, an output of the service includes at least one first-type output, and the first service QoS of the service includes QoS of the service and QoS of all or part of the at least one first-type output. The processing unit 701 is configured to determine first orchestration information based on the service QoS of the service. The transceiver unit is further configured to send the first orchestration information of the service to a second communication apparatus.

It should be noted that, for details about content such as information execution processes of the units of the communication apparatus 700, refer to the descriptions in the foregoing method embodiments of this application. Details are not described herein again.

FIG. 8 is a diagram of another structure of a communication apparatus 800 according to this application. The communication apparatus 800 includes a logic circuit 801 and an input/output interface 802. The communication apparatus 800 may be a chip or an integrated circuit.

The transceiver unit 702 shown in FIG. 7 may be a communication interface. The communication interface may be the input/output interface 802 in FIG. 8, and the input/output interface 802 may include an input interface and an output interface. Alternatively, the communication interface may be a transceiver circuit, and the transceiver circuit may include an input interface circuit and an output interface circuit.

Optionally, the logic circuit 801 is configured to determine first information, where the first information indicates first service QoS of a service, the service is XaaS, an output of the service includes at least one first-type output, and the first service QoS of the service includes QoS of the service and QoS of all or part of the at least one first-type output. The input/output interface 802 is configured to send the first information.

Optionally, the input/output interface 802 is configured to receive first information from a first communication apparatus, where the first information indicates first service QoS of a service, the service includes at least one of network as a service, computing as a service, sensing as a service, AI as a service, and data as a service, an output of the service includes at least one first-type output, and the first service QoS of the service includes QoS of the service and QoS of all or part of the at least one first-type output; and where service data of the service is provided at least through K tasks, and K is a positive integer. The logic circuit 801 is configured to determine second information. The input/output interface 802 is further configured to send the second information. The second information indicates task QoS of the K tasks or resource QoS of the K tasks, and the task QoS of the K tasks and the resource QoS of the K tasks are determined based on the first service QoS of the service.

Optionally, the input/output interface 802 is configured to receive second information, where the second information indicates task QoS of K tasks, the K tasks are used to provide service data of a service, K is a positive integer, and the service includes at least one of network as a service, computing as a service, sensing as a service, AI as a service, and data as a service. The logic circuit 801 is configured to determine third information. The input/output interface 802 is further configured to send the third information. The third information indicates resource QoS of the K tasks, and the resource QoS of the K tasks is determined based on the task QoS of the K tasks.

Optionally, the input/output interface 802 is configured to receive third information, where the third information indicates resource QoS of a task. The logic circuit 801 is configured to perform processing based on the resource QoS.

Optionally, the input/output interface 802 is configured to receive first information, where the first information indicates first service quality of service QoS of a service, the service includes at least one of network as a service, computing as a service, sensing as a service, artificial intelligence AI as a service, and data as a service, an output of the service includes at least one first-type output, and the first service QoS of the service includes QoS of the service and QoS of all or part of the at least one first-type output. The logic circuit 801 is configured to determine first orchestration information based on the service QoS of the service. The input/output interface 802 is further configured to send the first orchestration information of the service to a second communication apparatus.

The logic circuit 801 and the input/output interface 802 may further perform another step performed by the terminal device or the network device in any one of embodiments, and implement corresponding beneficial effect. Details are not described herein again.

In a possible implementation, the processing unit 701 shown in FIG. 7 may be the logic circuit 801 in FIG. 8.

Optionally, the logic circuit 801 may be a processing apparatus. All or part of functions of the processing apparatus may be implemented through software. All or part of the functions of the processing apparatus may be implemented through software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only the processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate arrays, FPGAs), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable logic device (programmable logic device, PLD), or another integrated chip, or any combination of the foregoing chips or processors.

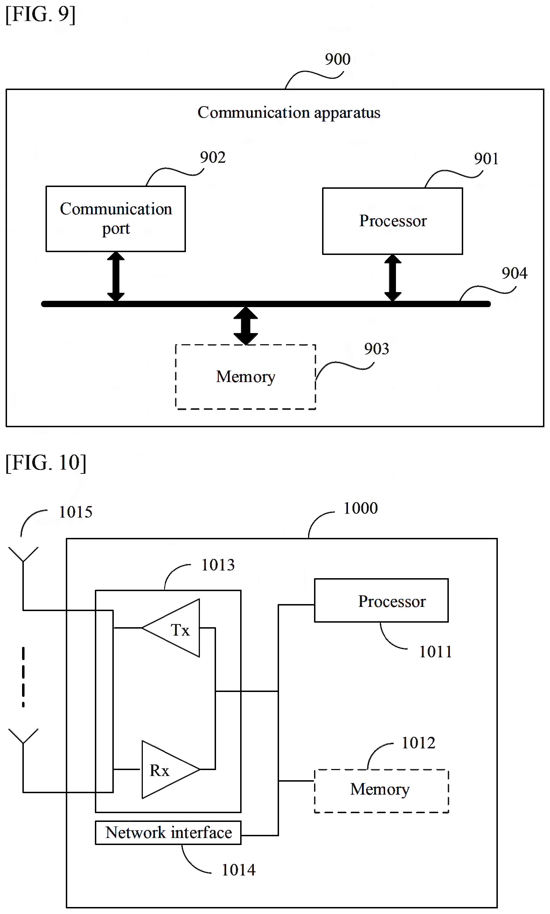

FIG. 9 shows a communication apparatus 900 in the foregoing embodiments according to an embodiment of this application. The communication apparatus 900 may be specifically the communication apparatus used as the terminal device in the foregoing embodiments.

In a diagram of a possible logical structure of the communication apparatus 900, the communication apparatus 900 may include but is not limited to at least one processor 901 and a communication port 902.

The transceiver unit 702 shown in FIG. 7 may be a communication interface. The communication interface may be the communication port 902 in FIG. 9. The communication port 902 may include an input interface and an output interface. Alternatively, the communication port 902 may be a transceiver circuit, and the transceiver circuit may include an input interface circuit and an output interface circuit.

Further optionally, the apparatus may include at least one of a memory 903 and a bus 904. In embodiments of this application, the at least one processor 901 is configured to control an action of the communication apparatus 900.

In addition, the processor 901 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that the communication apparatus 900 shown in FIG. 9 may be specifically configured to implement the steps implemented by the terminal device in the foregoing method embodiments, and achieve the technical effect corresponding to the terminal device. For a specific implementation of the communication apparatus shown in FIG. 9, refer to the descriptions in the foregoing method embodiments. Details are not described herein again.

FIG. 10 is a diagram of a structure of a communication apparatus 1000 in the foregoing embodiments according to an embodiment of this application. The communication apparatus 1000 may be specifically a communication apparatus used as the network device in the foregoing embodiments. For a structure of the communication apparatus, refer to the structure shown in FIG. 10.

The communication apparatus 1000 includes at least one processor 1011 and at least one network interface 1014. Further optionally, the communication apparatus includes at least one memory 1012, at least one transceiver 1013, and one or more antennas 1015. The processor 1011, the memory 1012, the transceiver 1013, and the network interface 1014 are connected, for example, connected through a bus. In this embodiment of this application, the connection may include various interfaces, transmission lines, buses, or the like. This is not limited in this embodiment. The antenna 1015 is connected to the transceiver 1013. The network interface 1014 is configured to enable the communication apparatus to communicate with another communication device through a communication link. For example, the network interface 1014 may include a network interface between the communication apparatus and a core network device, for example, an S1 interface. The network interface may include a network interface between the communication apparatus and another communication apparatus (for example, another network device or core network device), for example, an X2 or Xn interface.

The transceiver unit 702 shown in FIG. 7 may be a communication interface. The communication interface may be the network interface 1014 in FIG. 10. The network interface 1014 may include an input interface and an output interface. Alternatively, the network interface 1014 may be a transceiver circuit, and the transceiver circuit may include an input interface circuit and an output interface circuit.

The processor 1011 is mainly configured to: process a communication protocol and communication data, control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to: control an entire terminal device, execute the software program, and process the data of the software program. Functions of the baseband processor and the central processing unit may be integrated into the processor 1011 in FIG. 10. A person skilled in the art may understand that the baseband processor and the central processing unit may alternatively be independent processors, and are interconnected by using a technology like a bus. A person skilled in the art may understand that the terminal device may include a plurality of baseband processors to adapt to different network standards, the terminal device may include a plurality of central processing units to enhance a processing capability of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1012 may be independent, and connected to the processor 1011. Optionally, the memory 1012 and the processor 1011 may be integrated together, for example, integrated in a chip. The memory 1012 can store program code for executing technical solutions of embodiments of this application, and execution of the program code is controlled by the processor 1011. Various types of computer program code executed may also be considered as a driver of the processor 1011.

FIG. 10 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in embodiments of this application.

The transceiver 1013 may be configured to support receiving or sending of a radio frequency signal between the communication apparatus and a terminal, and the transceiver 1013 may be connected to the antenna 1015. The transceiver 1013 includes a transmitter Tx and a receiver Rx. Specifically, the one or more antennas 1015 may receive a radio frequency signal. The receiver Rx of the transceiver 1013 is configured to: receive the radio frequency signal from the antenna, convert the radio frequency signal into a digital baseband signal or a digital intermediate frequency signal, and provide the digital baseband signal or the digital intermediate frequency signal for the processor 1011, so that the processor 1011 further processes the digital baseband signal or the digital intermediate frequency signal, for example, performs demodulation and decoding. In addition, the transmitter Tx of the transceiver 1013 is further configured to: receive a modulated digital baseband signal or a modulated digital intermediate frequency signal from the processor 1011, convert the modulated digital baseband signal or the modulated digital intermediate frequency signal into a radio frequency signal, and send the radio frequency signal through the one or more antennas 1015. Specifically, the receiver Rx may selectively perform one-level or multi-level down frequency mixing and analog-to-digital conversion on the radio frequency signal to obtain the digital baseband signal or the digital intermediate frequency signal. A sequence of down frequency mixing and the analog-to-digital conversion is adjustable. The transmitter Tx may selectively perform one-level or multi-level up frequency mixing and digital-to-analog conversion on the modulated digital baseband signal or the modulated digital intermediate frequency signal to obtain the radio frequency signal. A sequence of the up frequency mixing and the digital-to-analog conversion is adjustable. The digital baseband signal and the digital intermediate frequency signal may be collectively referred to as a digital signal.

The transceiver 1013 may also be referred to as a transceiver unit, a transceiver machine, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. That is, the transceiver unit includes the receiving unit and the sending unit. The receiving unit may also be referred to as a receiver, an input interface, a receiver circuit, or the like. The sending unit may be referred to as a transmitting device, a transmitter, a transmitter circuit, or the like.

It should be noted that, the communication apparatus 1000 shown in FIG. 10 may be specifically configured to: implement steps implemented by the network device in the foregoing method embodiments, and achieve technical effect corresponding to the network device. For a specific implementation of the communication apparatus 1000 shown in FIG. 10, refer to the descriptions in the foregoing method embodiments. Details are not described herein again.

An embodiment of this application further provides a computer-readable storage medium. The storage medium is configured to store one or more computer-executable instructions. When the computer-executable instructions are executed by a processor, the processor performs the method according to the possible implementations of the terminal device or the network device in the foregoing embodiments.

An embodiment of this application further provides a computer program product (or referred to as a computer program). When the computer program product is executed by a processor, the processor performs the method according to the possible implementations of the terminal device or the network device.

An embodiment of this application further provides a chip system. The chip system includes at least one processor, configured to support a communication apparatus in implementing functions in the possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the terminal device or the network device in the foregoing method embodiments.

An embodiment of this application further provides a communication system. The communication system includes the terminal device and the network device in any one of the foregoing embodiments.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the communication apparatus is a chip used in a terminal, the chip in the terminal implements a function of the terminal in the foregoing method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent to the base station by these modules.

When the communication apparatus is a chip used in a base station, the chip in the base station implements a function of the base station in the method embodiments. That the chip in the base station receives information from a terminal may be understood as that the information is first received by another module (for example, a radio frequency module or an antenna) in the base station, and then sent by these modules to the chip in the base station. That the chip in the base station sends information to a terminal may be understood as that the information is first sent to another module (for example, a radio frequency module or an antenna) in the base station, and then sent by these modules to the terminal.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be disposed in an ASIC. In addition, the ASIC may be located in a base station or a terminal. The processor and the storage medium may alternatively exist in a base station or terminal as discrete components.

All or a part of the foregoing embodiments may be implemented by using software, hardware, firmware, or any combination thereof. When software is used to implement embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A quality of service management method, comprising:
determining first information, wherein the first information indicates first service quality of service QoS of a service, the service comprises at least one of network as a service, computing as a service, sensing as a service, artificial intelligence AI as a service, and data as a service, an output of the service comprises at least one type of output, and the first service QoS of the service comprises QoS of the service and QoS of all or part of the at least one type of output; and
sending the first information.

2. The method according to claim 1, wherein sending the first information comprises:
sending all or part of the first information to a second communication apparatus.

3. The method according to claim 2, wherein before sending all or part of the first information to the second communication apparatus, the method further comprises:
receiving orchestration information of the service from a fifth communication apparatus, wherein the orchestration information is used to determine the second communication apparatus.

4. The method according to claim 1, wherein sending the first information comprises:
sending the first information to a fifth communication apparatus.

5. The method according to claim 1, wherein sending the first information comprises:
sending the first information to a unified data repository UDR.

6. A quality of service management method, comprising:
receiving first information from a first communication apparatus, wherein the first information indicates first service QoS of a service, the service comprises at least one of network as a service, computing as a service, sensing as a service, AI as a service, and data as a service, an output of the service comprises at least one first-type output, and the first service QoS of the service comprises QoS of the service and QoS of all or part of the at least one first-type output; and
wherein service data of the service is provided at least through K tasks, and K is a positive integer; and
sending second information, wherein the second information indicates task QoS of the K tasks or resource QoS of the K tasks, and the task QoS of the K tasks and the resource QoS of the K tasks are determined based on the first service QoS of the service.

7. The method according to claim 6, wherein
an output of each of the K tasks comprises at least one second-type output, and task QoS of each task comprises QoS of each task and QoS of all or part of the at least one second-type output.

8. The method according to claim 6 or 7, wherein each of the K tasks comprises one or more subtasks, and the resource QoS of the K tasks comprises resource QoS of the one or more subtasks; and
the resource QoS of the K tasks is determined based on the task QoS of the K tasks.

9. The method according to any one of claims 6 to 8, wherein that the task QoS of the K tasks is determined based on the service QoS of the service comprises: the task QoS of the K tasks is determined based on the service QoS of the service and at least one of the following: orchestration information of the service or a task QoS template.

10. The method according to claim 9, wherein the method further comprises:
receiving the orchestration information of the service from a fifth communication apparatus.

11. The method according to claim 9, wherein the method further comprises:
determining the orchestration information of the service based on the service QoS of the service.

12. The method according to any one of claims 9 to 11, wherein the task QoS template satisfies at least one of the following:
the task QoS template is determined based on device information of one or more third communication apparatuses connected to a second communication apparatus;
the task QoS template is determined based on service QoS of a service historically processed by the second communication apparatus, orchestration information of the historically processed service, and historically processed task QoS; or
the task QoS template is determined based on feedback information on historically processed task QoS from the one or more third communication apparatuses connected to the second communication apparatus.

13. A quality of service management method, comprising:
receiving second information, wherein the second information indicates task QoS of K tasks, the K tasks are used to provide service data of a service, K is a positive integer, and the service comprises at least one of network as a service, computing as a service, sensing as a service, AI as a service, and data as a service; and
sending third information, wherein the third information indicates resource QoS of the K tasks, and the resource QoS of the K tasks is determined based on the task QoS of the K tasks.

14. The method according to claim 13, wherein
an output of each of the K tasks comprises at least one type of output, and task QoS of each task comprises QoS of each task and QoS of all or part of the at least one type of output.

15. The method according to claim 13 or 14, wherein each of the K tasks comprises one or more subtasks, and the resource QoS of the K tasks comprises resource QoS of the one or more subtasks; and
resource QoS of each subtask comprises one or more QoS characteristics and a QoS parameter corresponding to each QoS characteristic.

16. A communication apparatus, comprising a processing unit and a transceiver unit, wherein
the processing unit is configured to determine first information, wherein the first information indicates first service quality of service QoS of a service, the service comprises at least one of network as a service, computing as a service, sensing as a service, artificial intelligence AI as a service, and data as a service, an output of the service comprises at least one type of output, and the first service QoS of the service comprises QoS of the service and QoS of all or part of the at least one type of output; and
the transceiver unit is configured to send the first information.

17. The apparatus according to claim 16, wherein that the transceiver unit is configured to send the first information comprises:
the transceiver unit is configured to send all or part of the first information to a second communication apparatus.

18. The apparatus according to claim 17, wherein the transceiver unit is further configured to receive orchestration information of the service from a fifth communication apparatus, and the orchestration information is used to determine the second communication apparatus.

19. The apparatus according to any one of claims 16 to 18, wherein that the transceiver unit is configured to send the first information comprises:
the transceiver unit is configured to send the first information to the fifth communication apparatus.

20. The apparatus according to any one of claims 16 to 18, wherein that the transceiver unit is configured to send the first information comprises:
the transceiver unit is configured to send the first information to a unified data repository UDR.

21. A communication apparatus, comprising a processing unit and a transceiver unit, wherein
the transceiver unit is configured to receive first information from a first communication apparatus, wherein the first information indicates first service QoS of a service, the service comprises at least one of network as a service, computing as a service, sensing as a service, AI as a service, and data as a service, an output of the service comprises at least one first-type output, and the first service QoS of the service comprises QoS of the service and QoS of all or part of the at least one first-type output; and wherein service data of the service is provided at least through K tasks, and K is a positive integer;
the processing unit is configured to determine second information, wherein the second information indicates task QoS of the K tasks or resource QoS of the K tasks, and the task QoS of the K tasks and the resource QoS of the K tasks are determined based on the first service QoS of the service; and
the transceiver unit is further configured to send the second information.

22. The apparatus according to claim 21, wherein
an output of each of the K tasks comprises at least one second-type output, and task QoS of each task comprises QoS of each task and QoS of all or part of the at least one second-type output.

23. The apparatus according to claim 21 or 22, wherein each of the K tasks comprises one or more subtasks, and the resource QoS of the K tasks comprises resource QoS of the one or more subtasks; and
the resource QoS of the K tasks is determined based on the task QoS of the K tasks.

24. The apparatus according to any one of claims 21 to 23, wherein that the task QoS of the K tasks is determined based on the service QoS of the service comprises:
the task QoS of the K tasks is determined based on the service QoS of the service and at least one of the following:
orchestration information of the service or a task QoS template.

25. The apparatus according to claim 24, wherein the apparatus further comprises: receiving the orchestration information of the service from a fifth communication apparatus.

26. The apparatus according to claim 24, wherein the apparatus further comprises: determining the orchestration information of the service based on the service QoS of the service.

27. The apparatus according to any one of claims 24 to 26, wherein the task QoS template satisfies at least one of the following:
the task QoS template is determined based on device information of one or more third communication apparatuses connected to a second communication apparatus;
the task QoS template is determined based on service QoS of a service historically processed by the second communication apparatus, orchestration information of the historically processed service, and historically processed task QoS; or
the task QoS template is determined based on feedback information on the historically processed task QoS from the one or more third communication apparatuses connected to the second communication apparatus.

28. A communication apparatus, comprising a processing unit and a transceiver unit, wherein
the transceiver unit is configured to receive second information, wherein the second information indicates task QoS of K tasks, the K tasks are used to provide service data of a service, K is a positive integer, and the service comprises at least one of network as a service, computing as a service, sensing as a service, AI as a service, and data as a service;
the processing unit is configured to determine third information, wherein the third information indicates resource QoS of the K tasks, and the resource QoS of the K tasks is determined based on the task QoS of the K tasks; and
the transceiver unit is further configured to send the third information.

29. The apparatus according to claim 28, wherein
an output of each of the K tasks comprises at least one type of output, and task QoS of each task comprises QoS of each task and QoS of all or part of the at least one type of output.

30. The apparatus according to claim 28 or 29, wherein each of the K tasks comprises one or more subtasks, and the resource QoS of the K tasks comprises resource QoS of the one or more subtasks; and
resource QoS of each subtask comprises one or more QoS characteristics and a QoS parameter corresponding to each QoS characteristic.

31. A communication apparatus, comprising at least one processor, wherein
the at least one processor is configured to perform the method according to any one of claims 1 to 15.

32. A readable storage medium, wherein the storage medium stores a computer program or instructions, and when the computer program or the instructions are executed by a communication apparatus, the method according to any one of claims 1 to 15 is implemented.

33. A computer program product, comprising instructions, wherein when the instructions are run on a computer, the computer is enabled to perform the method according to any one of claims 1 to 15.

34. A communication system, wherein the system comprises a first communication apparatus and a second communication apparatus; and
the first communication apparatus is configured to perform the method according to any one of claims 1 to 5, and the second communication apparatus is configured to perform the method according to any one of claims 6 to 12.

35. The system according to claim 34, wherein the system further comprises a third communication apparatus, and the third communication apparatus is configured to perform the method according to any one of claims 13 to 15.

36. The system according to claim 35, wherein the system further comprises one or more fourth communication apparatuses, and the one or more fourth communication apparatuses are configured to perform processing based on the resource QoS.
